# EUROPEAN PATENT APPLICATION

(11) **EP 4 207 676 A1**
(43) Date of publication of application: **05.07.2023**
(21) Application number: 20955851.9
(22) Date of filing: 30.09.2020
(51) Int. Cl.: H04L 9/32, H04W 12/06

(54) **METHOD AND APPARATUS FOR ESTABLISHING SECURE COMMUNICATION**

(71) Applicant: Huawei Technologies Co., Ltd., Shenzhen, Guangdong 518129 (CN)
(72) Inventor: WU, Yizhuang, Shenzhen, Guangdong 518129 (CN); LI, He, Shenzhen, Guangdong 518129 (CN); LEI, Ao, Shenzhen, Guangdong 518129 (CN)
(74) Representative: MERH-IP Matias Erny Reichl Hoffmann Patentanwälte PartG mbB
(86) International application number: PCT/CN2020/119764
(87) International publication number: WO 2022/067831

(57) **Abstract**

A method and an apparatus for establishing secure communication are provided. The method includes: A terminal device receives a first message from a first network element, where the first message includes an identifier of a second network element and first indication information, and the first indication information indicates a candidate authentication mechanism associated with the second network element. The terminal device establishes a communication connection with the second network element based on the candidate authentication mechanism. According to the method and the apparatus in embodiments of this application, the terminal device may obtain an authentication mechanism of the dynamically configured second network element, to meet a requirement for establishing a secure communication connection through authentication in an MEC architecture.

## Description

### TECHNICAL FIELD

This application relates to the field of communication technologies, and in particular, to a method and an apparatus for establishing secure communication.

### BACKGROUND

Multi-access edge computing (multi-access edge computing, MEC) can provide a nearby telecommunication user with a required information technology (information technology, IT) service and a cloud computing function by using a radio access network, to create a carrier-class service environment with high performance, low delay, and high bandwidth. This accelerates fast downloading of content, services, and applications in a network and allows a user to have uninterrupted high-quality network experience.

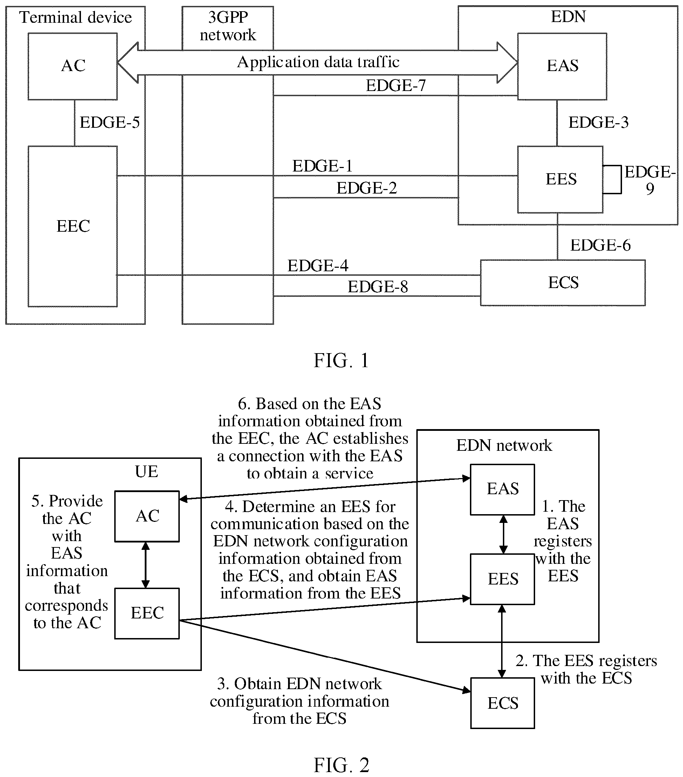

As shown in FIG. 1, the following structure model is defined in MEC research of SA6 of a 3rd generation partnership project (3rd generation partnership project, 3GPP).

One or more edge enabler servers (edge enabler servers, EESs) and one or more edge application servers (edge application servers, EASs) are dynamically deployed on an edge data network (edge data network, EDN). User equipment (user equipment, UE) includes an application client (application client, AC) and an edge enabler client (edge enabler client, EEC). Independent of the user equipment and the EDN, an MEC architecture further includes one or more edge configuration servers (edge configuration servers, ECSs).

To protect communication security between a client and a server (for example, between the AC and the EAS, between the EEC and the ECS, or between the EEC and the EES), authentication is usually required between the client and the server before application layer data transmission is performed between the client and the server.

Currently, common authentication mechanisms include an authentication and key management for applications (authentication and key management for applications, AKMA) mechanism, a generic bootstrapping architecture (generic bootstrapping architecture, GBA) mechanism, and a certificate-based authentication mechanism.

In the MEC architecture, because the EES, the EAS, and the ECS are all dynamically deployed, the UE cannot learn of authentication mechanisms supported by the dynamically deployed EES, EAS, and ECS. Consequently, the UE cannot accurately use a corresponding authentication mechanism to initiate a connection establishment request with the EES, the EAS, or the ECS.

Therefore, currently, a method that is applicable to the MEC architecture and that is for establishing a secure communication connection between the client and the server through the authentication is urgently required.

### SUMMARY

This application provides a method and an apparatus for establishing secure communication, to resolve a problem that in an MEC architecture, an authentication mechanism supported by a server cannot be learned in advance to establish a secure communication connection.

According to a first aspect, a method for establishing secure communication is provided. The method includes: A terminal device receives a first message from a first network element, where the first message includes an identifier of a second network element and first indication information, and the first indication information indicates a candidate authentication mechanism associated with the second network element. The terminal device establishes a communication connection with the second network element based on the candidate authentication mechanism.

According to the foregoing method, the terminal device may obtain the candidate authentication mechanism of the dynamically deployed second network element, and establish the communication connection with the second network element based on the candidate authentication mechanism. Optionally, the second network element may be an ECS, an EES, an EAS, or the like, to meet a requirement of an MEC architecture.

Optionally, the method further includes: The terminal device sends a second message to the first network element, where the first message is a response message of the second message.

According to the foregoing method, the terminal device may first send the second message to the first network element, and then the first network element sends the response message of the second message, that is, the first message, to the terminal device. In other words, when the terminal device needs to obtain the candidate authentication mechanism that corresponds to the second network element, the terminal device may directly request the candidate authentication mechanism from the first network element, so that the terminal device can obtain the candidate authentication mechanism of the dynamically deployed second network element.

In a design, the candidate authentication mechanism is at least one first authentication mechanism used when the terminal device establishes the communication connection with the second network element, and the second message includes at least one second authentication mechanism supported by the terminal device.

According to the foregoing method, when receiving the second message, the first network element may directly obtain the at least one authentication mechanism supported by the terminal device in the second message. The first network element determines the candidate authentication mechanism based on the at least one authentication mechanism supported by the terminal device and at least one authentication mechanism supported by the second network element, to ensure that the candidate authentication mechanism is supported by both the terminal device and the second network element. In addition, when receiving the candidate authentication mechanism, the terminal device may directly use the candidate authentication mechanism to establish a communication connection, and the terminal device does not need to perform further processing. This reduces processing complexity of the terminal device and saves power

Optionally, the second message includes a network type used by the terminal device to access the second network element. In this way, when determining the candidate authentication mechanism, the first network element may further consider the network type used by the terminal device to access the second network element, to ensure that the selected candidate authentication mechanism is also supported by a network. Such a design is mainly to consider that some authentication mechanisms need to be supported by the network. For example, an AKMA authentication mechanism needs to be supported by a 5G network, and a GBA authentication mechanism needs to be supported by a 4G network.

Optionally, the second message further includes priority information of the at least one second authentication mechanism. When determining the candidate authentication mechanism, the first network element may further consider priorities of authentication mechanisms supported by the terminal device and the second network element, and preferentially select a high-priority authentication mechanism supported by both the terminal device and the second network element to establish the communication connection.

Optionally, that the terminal device establishes a communication connection with the second network element based on the candidate authentication mechanism includes: The terminal device determines a target authentication mechanism from the at least one first authentication mechanism. The terminal device generates a first key and a first key identifier that correspond to the target authentication mechanism. The terminal device sends a communication connection establishment request to the second network element, where the communication connection establishment request includes the first key identifier. Optionally, the first key identifier may identify the terminal device.

In a possible design, the first key and the first key identifier that correspond to the target authentication mechanism may have been generated and stored in the terminal device in advance. In this case, the terminal devices may directly obtain the first key identifier that corresponds to the target authentication mechanism. To be specific, that the terminal device establishes a communication connection with the second network element based on the candidate authentication mechanism includes: The terminal device determines the target authentication mechanism from the at least one first authentication mechanism. The terminal device obtains the first key identifier that corresponds to the target authentication mechanism. The terminal device sends the communication connection establishment request to the second network element, where the communication connection establishment request includes the first key identifier

According to the foregoing method, the terminal device may obtain, based on the candidate authentication mechanism, the authentication mechanism of the dynamically deployed second network element, so that the terminal device may directly include the key identifier that corresponds to the candidate authentication mechanism in the communication connection establishment request, to directly establish the communication connection. If the terminal device cannot obtain the authentication mechanism of the dynamically deployed second network element, the terminal device needs to first send a communication connection establishment request to the second network element, and then the second network element indicates an authentication mechanism supported by the second network element. Then, the terminal device sends the communication connection establishment request to the second network element, and the request carries a key identifier of the authentication mechanism supported by the second network element. Compared with this process, the method can reduce signaling overheads, reduce a connection delay, and the like.

In another design, the candidate authentication mechanism is at least one third authentication mechanism supported by the second network element.

According to the foregoing method, the first network element directly sends the authentication mechanism supported by the second network element to the terminal device, and the terminal device selects, based on the authentication mechanism supported by the second network element and the authentication mechanism supported by the terminal device, the target authentication mechanism to establish the communication connection. In this way, the second network element side does not need to perform further determining, which reduces workload of the second network element. Further, in the foregoing communication process of the terminal device and the second network element, the authentication mechanism supported by the terminal device does not need to be transmitted, thereby reducing signaling overheads.

Optionally, that the terminal device establishes a communication connection with the second network element based on the candidate authentication mechanism includes: The terminal device determines a target authentication mechanism based on the at least one third authentication mechanism and assistance information. The assistance information includes at least one of the following: at least one second authentication mechanism supported by the terminal device and a network type used by the terminal device to access the second network element. The terminal device generates a first key and a first key identifier that correspond to the target authentication mechanism. The terminal device sends a communication connection establishment request to the second network element, where the communication connection establishment request includes the first key identifier

According to the foregoing method, the terminal device may directly include the key that corresponds to the target authentication mechanism in the communication connection establishment request, and send the communication connection establishment request once, to successfully establish the communication connection between the terminal device and the second network element. Compared with a solution in which a communication connection establishment request needs to be sent for a plurality of times, the method can reduce signaling overheads, reduce a connection delay, and the like.

Optionally, the terminal device may further determine the candidate authentication mechanism by considering priority information, for example, priority information of the at least one second authentication mechanism and priority information of the at least one third authentication mechanism. In this way, it can be ensured that an authentication mechanism with a higher priority is preferentially selected to establish the communication connection. Optionally, in this design, the first message may further include priority information of the at least one authentication mechanism supported by the second network element, and the like.

Optionally, in the foregoing two designs, the target authentication mechanism is an authentication mechanism that corresponds to the network type. For example, if a network currently accessed by the terminal device is the 5G network, the target authentication mechanism may be the AKMA mechanism. Alternatively, if a network currently accessed by the terminal device is the 4G network, the target authentication mechanism may be the GBA mechanism or the like.

Optionally, in the foregoing two designs, the method may further include: The terminal device generates a second key based on the first key and the identifier of the second network element. The terminal device performs security protection on the communication connection establishment request by using the second key, to generate a first message authentication code MAC. The communication connection establishment request further includes the first MAC.

In the foregoing method, after receiving the communication connection establishment request, the second network element may obtain the first key identifier in the communication connection establishment request, obtain the second key based on the first key identifier, and generate a second MAC based on the second key. If the first MAC is the same as the second MAC, verification succeeds, and the communication connection between the terminal device and the second network element may be established. Subsequently, the terminal device and the second network element may also perform other security protection by using the second key. This is not limited, to ensure that a secure communication connection is established between the terminal device and the second network element.

Optionally, the method further includes: The terminal device receives a communication connection establishment response sent by the second network element. Security protection on the communication connection establishment response is performed by using the second key. For example, the communication connection establishment response includes a third MAC. The third MAC is obtained by the second network element through calculation on a part or all of information in the connection establishment response based on the second key. Correspondingly, the terminal device further verifies the third MAC based on the second key, to determine that the communication connection establishment response is not tampered with. In this way, the terminal device indirectly verifies that the second network element is a valid network element.

Optionally, the first network element is an edge configuration server ECS, the second network element is an edge enabler server EES, and the terminal device may obtain, via the ECS, a candidate authentication mechanism that corresponds to the EES. Alternatively, the first network element is an EES, the second network element is an edge application server EAS, and the terminal device may obtain, via the EES, a candidate authentication mechanism that corresponds to the EAS. Alternatively, the first network element is an access and mobility management function AMF or a session management function SMF, the second network element is an ECS, and the terminal device may obtain, via the AMF or the SMF, a candidate authentication mechanism that corresponds to the ECS. In this design, the first message may be a non-access stratum NAS message. For example, the first message is a response message for the terminal device to request registration or a response message for the terminal device to request to establish a protocol data unit PDU session. This is not limited.

According to the foregoing method, the terminal device can obtain the candidate authentication mechanism of the dynamically deployed EES, EAS, or ECS, to meet a requirement of the MEC architecture.

Optionally, the candidate authentication mechanism includes at least one of the following: an authentication and key management for applications AKMA service, a generic bootstrapping architecture GBA service, a certificate mechanism, another mechanism used for authentication between the terminal device and the second network element, or the like.

According to the foregoing method, the terminal device may obtain the candidate authentication mechanism that corresponds to the dynamically deployed second network element in different authentication mechanisms, so that implementation is flexible and an application scope is wide.

According to a second aspect, a method for establishing secure communication is provided. The method includes: A first network element determines a candidate authentication mechanism. The first network element sends a first message to a terminal device. The first message includes an identifier of a second network element and first indication information. The first indication information indicates a candidate authentication mechanism associated with the second network element. The candidate authentication mechanism is used by the terminal device to establish a communication connection with the second network element.

According to the foregoing method, the first network element may indicate the candidate authentication mechanism that corresponds to the second network element to the terminal device. The second network element may be dynamically deployed, for example, an ECS, an EES, or an EAS in an MEC architecture, so that the terminal device can dynamically obtain the candidate authentication mechanism of the second network element, to meet a requirement of the MEC architecture.

Optionally, the method further includes: The first network element receives a second message from the terminal device, where the first message is a response message of the second message.

According to the foregoing method, the terminal device may first send the second message to the first network element, and then the first network element sends the response message of the second message, that is, the first message, to the terminal device. In other words, when the terminal device needs to obtain the candidate authentication mechanism that corresponds to the second network element, the terminal device may directly request the candidate authentication mechanism from the first network element, so that the terminal device can obtain the candidate authentication mechanism of the dynamically deployed second network element.

In a possible implementation, the candidate authentication mechanism is at least one first authentication mechanism used when the terminal device establishes the communication connection with the second network element. That a first network element determines a candidate authentication mechanism includes: The first network element determines the candidate authentication mechanism based on at least one third authentication mechanism supported by the second network element and assistance information. The assistance information includes at least one of the following: at least one second authentication mechanism supported by the terminal device and a network type used by the terminal device to access the second network element.

According to the foregoing method, the first network element may directly indicate, to the terminal device, the authentication mechanism used when the terminal device establishes the communication connection with the second network element, and the terminal device does not need to perform further determining. This reduces processing complexity of the terminal device side and saves power.

Optionally, when determining the candidate authentication mechanism, the first network element may further consider the network type used by the terminal device to access the second network element, so that the selected candidate authentication mechanism can be supported by an access network. Correspondingly, the second message includes the at least one second authentication mechanism supported by the terminal device. Optionally, when determining the candidate authentication mechanism, the first network element may further consider priority information, for example, priority information of the second authentication mechanism supported by the terminal device and priority information of the third authentication mechanism supported by the second network element, so that the selected candidate authentication mechanism has a high priority. In this case, the second message may further include the priority information of the at least one second authentication mechanism supported by the terminal device.

In another design, the candidate authentication mechanism is at least one third authentication mechanism supported by the second network element.

According to the foregoing method, the first network element directly indicates the authentication mechanism supported by the second network element to the terminal device, without performing additional processing, and the terminal device does not need to notify the first network element of the authentication mechanism supported by the terminal device, so that a processing process on the first network element side is reduced and signaling overheads are saved.

Optionally, in the foregoing method, the terminal device determines a final target authentication mechanism between the terminal device and the second network element based on the authentication mechanism supported by the second network element. Optionally, the terminal device may further consider the priority information of the authentication mechanisms of the terminal device and the second network element. Therefore, the first network element needs to notify the terminal device of priority information of authentication mechanism supported by the second network element. For example, the first message further includes the priority information of the at least one third authentication mechanism supported by the second network element.

For the foregoing two designs, the first network element is an edge configuration server ECS, the second network element is an edge enabler server EES, and the terminal device may obtain, via the ECS, a candidate authentication mechanism that corresponds to the EES. Alternatively, the first network element is an EES, the second network element is an edge application server EAS, and the terminal device may obtain, via the EES, a candidate authentication mechanism that corresponds to the EAS. Alternatively, the first network element is an access and mobility management function AMF or a session management function SMF, the second network element is an edge configuration server ECS, and the terminal device may obtain, via the AMF or the SMF, a candidate authentication mechanism that corresponds to the ECS. In this design, the first message may be a non-access stratum NAS message. For example, the first message is a response message for the terminal device to request registration or a response message for the terminal device to request to establish a protocol data unit PDU session. This is not limited.

According to the foregoing method, the terminal device can obtain the candidate authentication mechanism of the dynamically deployed EES, EAS, or ECS, to meet a requirement of the MEC architecture.

Optionally, the candidate authentication mechanism includes at least one of the following: an authentication and key management for applications AKMA service, a generic bootstrapping architecture GBA service, a certificate mechanism, another mechanism used for authentication between the terminal device and the second network element, or the like.

According to the foregoing method, the terminal device may obtain the candidate authentication mechanism that corresponds to the dynamically deployed second network element in different authentication mechanisms, so that implementation is flexible and an application scope is wide.

According to a third aspect, an embodiment of this application further provides an apparatus. The communication apparatus is used in a terminal device. For beneficial effects, refer to the descriptions in the first aspect. Details are not described herein again. The apparatus has a function of implementing the behavior in the method embodiment in the first aspect. The function may be implemented by hardware, or may be implemented by hardware executing corresponding software. The hardware or the software includes one or more units that correspond to the foregoing function. In a possible design, a structure of the apparatus includes a communication unit and a processing unit. These units may perform corresponding functions in the method example in the first aspect. For details, refer to the detailed descriptions in the method embodiment. Details are not described herein again.

According to a fourth aspect, an embodiment of this application further provides an apparatus. The communication apparatus is used in a first network element. For beneficial effects, refer to the descriptions in the second aspect. Details are not described herein again. The apparatus has a function of implementing the behavior in the method example in the second aspect. The function may be implemented by hardware, or may be implemented by hardware executing corresponding software. The hardware or the software includes one or more units that correspond to the foregoing function. In a possible design, a structure of the apparatus includes a communication unit and a processing unit. These units may perform corresponding functions in the method example in the second aspect. For details, refer to the detailed descriptions in the method embodiment. Details are not described herein again.

According to a fifth aspect, an embodiment of this application further provides an apparatus. The communication apparatus is used in a terminal device. For beneficial effects, refer to the descriptions in the first aspect. Details are not described herein again. A structure of the communication apparatus includes a processor and a memory, and the processor is configured to support the terminal device in performing a corresponding function in the method according to first aspect. The memory is coupled to the processor, and stores program instructions and data that are necessary for the communication apparatus. The structure of the communication apparatus further includes a communication interface, configured to communicate with another device.

According to a sixth aspect, an embodiment of this application further provides an apparatus. The communication apparatus is used in a first network element. For beneficial effects, refer to the descriptions in the second aspect. Details are not described herein again. A structure of the communication apparatus includes a processor and a memory, and the processor is configured to support the first network element in performing a corresponding function in the method according to second aspect. The memory is coupled to the processor, and stores program instructions and data that are necessary for the communication apparatus. The structure of the communication apparatus further includes a communication interface, configured to communicate with another device.

According to a seventh aspect, this application further provides a computer-readable storage medium. The computer-readable storage medium stores instructions. When the instructions are on a computer, the computer is enabled to perform the method according to first aspect or perform the method according to second aspect.

According to an eighth aspect, this application further provides a computer program product including instructions. When the computer program product runs on a computer, the computer is enabled to perform the method according to first aspect or perform the method according to second aspect.

According to a ninth aspect, this application further provides a computer chip. The chip is connected to a memory, and the chip is configured to read and execute a software program stored in the memory, to perform the method according to the first aspect or perform the method according to the second aspect.

### BRIEF DESCRIPTION OF DRAWINGS

FIG. 1 is a schematic diagram of an MEC architecture according to an embodiment of this application;
FIG. 2 is a schematic diagram of a communication process in an MEC architecture according to an embodiment of this application;
FIG. 3 is a schematic diagram of a 3GPP network according to an embodiment of this application;
FIG. 4 is a flowchart of a communication method according to an embodiment of this application;
FIG. 5 is a flowchart in which an ECS obtains at least one authentication mechanism supported by an EES according to an embodiment of this application;
FIG. 6 is a flowchart of a communication method according to an embodiment of this application;
FIG. 7 is a flowchart in which an EES obtains information about at least one authentication mechanism supported by an EAS according to an embodiment of this application;
FIG. 8 is another flowchart of a communication method according to an embodiment of this application;
FIG. 9 is another flowchart of a communication method according to an embodiment of this application;
FIG. 10 is a flowchart of an AKMA authentication according to an embodiment of this application;
FIG. 11 is a schematic diagram of a structure of an apparatus according to an embodiment of this application; and
FIG. 12 is a schematic diagram of another structure of an apparatus according to an embodiment of this application.

### DESCRIPTION OF EMBODIMENTS

The following describes the technical solutions in embodiments of this application with reference to accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

An embodiment of this application provides a multi-access edge computing (multi-access edge computing, MEC) enabler edge application architecture. As shown in FIG. 1, the architecture includes at least the following functional network elements.

An edge application server (edge application server, EAS) is an application server deployed in an EDN. An application provider may dynamically instantiate an EAS in different EDN networks based on a requirement.

An application client (application client, AC) is a peer entity of the EAS on a terminal device side. The AC is used to obtain an application service from an application server by an application user (user). The AC is a client program of an application on a terminal device. The AC may be connected to an application server on a cloud to obtain an application service, or may be connected to an EAS deployed and running in one or more EDNs to obtain an application service. For example, the AC may be a Tencent client, an iQIYI client, a vehicle-to-everything (vehicle-to-everything, V2X) client, a mission critical (mission critical, MC) client, or the like installed on a terminal device.

An edge enabler server (edge enabler server, EES) can provide an enablement capability for the EAS deployed in the EDN. For example, the EES may provide a management capability for the EAS, and may support registration of the edge application server EAS, to obtain an identifier of the EAS and an authentication mechanism supported by the EAS, and optionally, to further obtain a priority of the authentication mechanism supported by the EAS. The EES may further provide the terminal device with an identifier of an available EAS, authentication-related information, and the like. The authentication-related information is used in an authentication procedure between the terminal device and the EAS. Further, the EES can send the identifier of the EAS to an ECS. The EES is deployed in the EDN. Usually, an EAS is registered with an EES, or information about the EAS is configured on the EES by using a management system. The EES is referred to as an EES associated with the EAS. The EES may control, manage, register with, or configure the EAS associated with the EES.

An edge enabler client (edge enabler client, EEC) is a peer entity of the EES on the terminal device side. The EEC is configured to register EEC information and AC information with the EES, perform security authentication and authorization, obtain the identifier of the EAS from the EES, and provide an edge computing enabling capability for the AC, for example, an EAS discovery service and returning the identifier of the EAS to the AC.

An edge configuration server (edge configuration server, ECS) is responsible for EDN configuration management, for example, providing EES information for the terminal device.

The application user may sign a service agreement with the application provider, to obtain a service provided by a server of the application provider. The application user can log in to the AC on the terminal device and communicate with the EAS through the AC to use the service provided by the server of the application provider. An enabler client (for example, the EEC) may be a middleware layer, and is usually located in an operating system, or is located between the AC and the operating system, or may be implemented inside the AC. The AC may obtain an edge enabling service from the enabler client through an application programming interface (application programming interface, API).

In a design, as shown in FIG. 2, based on the MEC architecture shown in FIG. 1, a procedure in which an AC obtains an EAS that can communicate with the AC is as follows.
1. An edge service provider dynamically deploys an EDN network based on a requirement, deploys an EES in the EDN network, and dynamically instantiates a specific EAS based on a requirement of an application provider. The EAS initiates a registration procedure to the EES to provide EAS information for the EES, for example, an EAS identifier, port information (for example, a fully qualified domain name (fully qualified domain name, FQDN), an IP address or a uniform resource identifier (uniform resource identifier, URI)), and an application client identifier (application client identifier, AC ID). The EAS information enables the EES to provide an available EAS for an EEC based on a request of the EEC.
2. The EES in the EDN network initiates a registration procedure to an ECS to provide EES information for the ECS. The EES information enables the ECS to provide an available EES for the EEC based on the request of the EEC. Further, the EES may provide the ECS with the EAS information registered with the EES in the registration procedure.
3. Based on the foregoing registration procedure, to obtain an edge application service, the EEC may first request the ECS to provide an edge service, to obtain information about an available EES through the ECS. The ECS can send the information about the available EES to the EEC based on the request of the EEC.
4. The EEC determines an EES for communication based on the EES information obtained from the ECS, and establishes a connection with the determined EES. The EEC obtains, from the connected EES, information about a specific EAS that provides the edge application service.
5. The EEC sends information about an EAS that corresponds to the AC to the AC based on the obtained EAS information.
6. Based on the information about the EAS obtained from the EEC, the AC establishes a connection with the EAS to obtain a service.

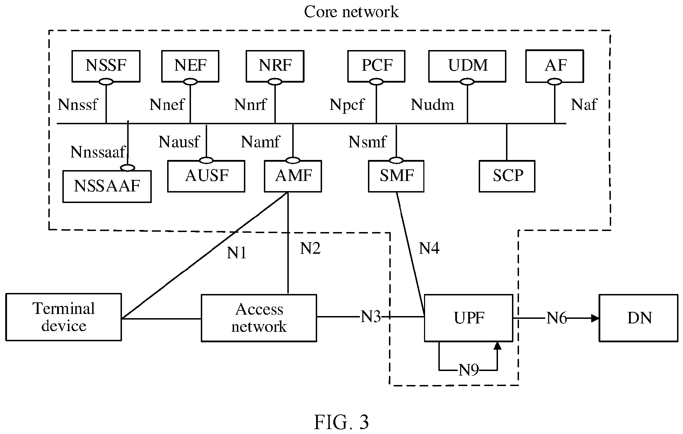

An embodiment of this application further provides a network architecture. As shown in FIG. 3, the network architecture includes at least one of a terminal device, an access network, a core network, and a data network (data network, DN). Different access network devices may be connected through an Xn interface, and the access network device may be connected to a core network device through an NG interface.

The terminal device may be referred to as a terminal for short, and is a device having a wireless transceiver function. The terminal device may be deployed on land, including being deployed indoor or outdoor or being handheld or vehicle-mounted; may be deployed on water (for example, on a ship); or may be deployed in the air (for example, on a plane, a balloon, or a satellite). The terminal device may be a mobile phone, a tablet computer, a computer having a wireless transceiver function, a virtual reality (virtual reality, VR) terminal device, an augmented reality (augmented reality, AR) terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, a wireless terminal device in a smart home, or the like. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5th generation (the 5th generation, 5G) network, a terminal device in a future evolved public land mobile network (public land mobile network, PLMN), or the like. The terminal device sometimes may also be referred to as user equipment (user equipment, UE), an access terminal device, a vehicle-mounted terminal device, a terminal device in industrial control, a UE unit, a UE station, a mobile station, a remote station, a remote terminal device, a mobile device, a wireless communication device, a UE agent, a UE apparatus, or the like. The terminal device may be fixed or mobile. This is not limited in embodiments of this application.

The access network is configured to implement a radio access-related function. The access network may provide a network access function for a terminal device in a specific area and include a radio access network (radio access network, RAN) device and an access network (access network, AN) device. The RAN device is mainly a wireless network device defined in a 3GPP network, and the AN device is mainly an access network device defined in non-3GPP. The RAN device may provide functions, for example, radio resource management, quality of service management, and data encryption and compression, for the terminal device.

The core network is mainly configured to: manage a terminal device, and provide a function of communicating with an external network. A core network device may include one or more of the following network elements.

An access and mobility management function (access and mobility management function, AMF) network element is mainly responsible for mobility management in a mobile network, for example, user location update, registration of a user with a network, and user handover.

A session management function (session management function, SMF) network element is mainly configured to: manage a session, allocate and manage an IP address of the terminal device, select a user plane function, serve as a termination point of a policy control or charging function interface, notify downlink data, and so on.

A user plane function (user plane function, UPF) network element is mainly responsible for forwarding and receiving user data. In downlink transmission, the UPF network element may receive user data from the data network (data network, DN), and transmit the user data to the terminal device through the access network device. In uplink transmission, the UPF network element may receive user data from the terminal device through the access network device, and forward the user data to the DN. Optionally, resource transmission and scheduling functions in the UPF network element that provide services for the terminal device may be managed and controlled by an SMF network element.

An authentication server function (authentication server function, AUSF) network element is mainly used for user authentication and the like.

A network exposure function (network exposure function, NEF) network element is mainly configured to support capability and event exposure, for example, securely expose, to the outside, a service, a capability, and the like that are provided by a 3GPP network function.

A network repository function (network function (NF) repository function, NRF) network element is configured to: store description information of a network functional entity and a service provided by the network functional entity and support service discovery, network element entity discovery, and the like.

A policy control function (policy control function, PCF) network element is configured to: provide guidance on a unified policy framework for network behavior, provide policy rule information for a control plane function network element (for example, the AMF network element or the SMF network element), obtain user subscription information related to policy decision-making, and the like.

A unified data management (unified data management, UDM) network element is configured to: generate an authentication credential, process a user identifier (for example, store and manage a permanent identity of the user), control access authorization, manage subscription data, and the like.

A network slice-specific authentication and authorization function (network slice-specific authentication and authorization function, NSSAAF) network element is configured to support a procedure related to slice authentication and authorization, re-authorization, authorization revocation, or the like.

In addition, the foregoing core network may further include network elements such as an NSSF, an AF, and an SCP. These network elements are not described one by one. It should be noted that the network elements in the core network may have different names in different communication systems. In the schematic diagram shown in FIG. 1, a 5th generation mobile communication system is used as an example for description, and this is not intended to limit this application.

The DN may be a network that provides a data transmission service for a user. For example, the DN may be an IP multimedia service (IP multimedia service) network or an internet. The DN may include a plurality of application servers. The terminal device may establish a protocol data unit (protocol data unit, PDU) session from the terminal device to the DN, to access the DN. One data network may have one or more local data networks (local data networks, Local DNs), and these local data networks are data network access points (access points) close to a user attachment point (point of attachment).

In this embodiment of this application, the EES and the EAS in the architecture shown in FIG. 1 may be configured in the one or more EDNs. An EDN corresponds to a remote DN or a central DN. An application server deployed in the EDN is called the EAS, and a server deployed in the remote DN or the central DN is a remote server or a central server. Each EAS can provide an application service for a user nearby. The central server or remote server can provide the application service for all users.

The EDN network can be dynamically deployed based on a requirement. For example, if a large-scale event with large crowd flow is held in an area A in Shanghai, an EDN network can be deployed in this area for access of a nearby person. After the large-scale event ends, the EDN network deployed in the area A can be canceled. Optionally, an EES and an EAS in each EDN network may also be dynamically deployed. For example, if a game is newly launched and a large quantity of youths playing the game gather in an area B, an EAS that provides the game service may be instantiated in an EDN network of the area B. It can be learned that in the MEC architecture, the EES, the EAS, and even the ECS are all dynamically deployed, and the terminal device cannot learn, through preconfiguration, authentication mechanisms supported by the dynamically deployed EES, EAS, and ECS.

In a possible contention solution, because a terminal device does not know an authentication mechanism supported by a server (for example, an EES, an EAS, or an ECS), the terminal device directly sends a communication connection establishment request to the server, and the communication connection establishment request may not carry any authentication information. Because the communication connection establishment request does not carry any authentication information, the server indicates the terminal device to send the communication connection establishment request by using an authentication mechanism supported by the server. For example, the server sends a communication connection establishment response to the terminal device, and the communication connection establishment response may indicate the terminal device to initiate the communication connection establishment request by using the authentication mechanism supported by the server. The terminal device receives the communication connection establishment response, and re-initiates the communication connection establishment request based on the indication of the communication connection establishment response. A difference is that the communication connection establishment request carries authentication information that corresponds to the authentication mechanism supported by the server in this case. When receiving the re-initiated communication connection establishment request, the server establishes a communication connection with the terminal device.

It can be seen from the foregoing comparison that, although the contention solution may establish a secure communication connection through authentication between the client and the server, the following problems exist. 1. For the terminal device, two communication connection establishment requests are sent, and two communication connection establishment responses need to be processed, which wastes signaling. 2. After the terminal device sends the communication connection establishment request for the first time and receives the corresponding communication connection establishment response, the terminal device needs to generate the authentication information based on the corresponding authentication mechanism, and further send the communication connection establishment request to the server. From the time when the terminal device sends the communication connection establishment request for the first time to the time when the terminal device finally establishes the secure communication connection with the server, a delay is long, and communication experience of a user is greatly affected. This impact may be unacceptable in some scenarios, especially in an MEC scenario where a communication delay is sensitive.

Based on the foregoing descriptions, embodiments of this application provide a method for establishing secure communication. By using the method, a terminal device may learn of at least one authentication mechanism supported by a dynamically deployed EES, EAS, or ECS. The method is applicable to an MEC architecture and enables a client and a server to establish a secure communication connection by performing authentication. The method includes: A terminal device receives a first message from a first network element, where the first message includes an identifier of a second network element and first indication information, and the first indication information indicates a candidate authentication mechanism associated with the second network element. Optionally, the identifier of the second network element and the first indication information may be transmitted to the terminal device by using a same message, for example, the first message, or may be transmitted to the terminal device by using different messages. This is not limited. The identifier of the second network element may be a uniform resource identifier (uniform resource identifier, URI), a fully qualified domain name (fully qualified domain name, FQDN), an internet protocol (internet protocol, IP) address, or the like of the second network element. The terminal device establishes a communication connection with the second network element based on the candidate authentication mechanism. The second network element may be an EES, an EAS, an ECS, or the like. The candidate authentication mechanism may be an authentication mechanism supported by the second network element, an authentication mechanism used to establish the communication connection between the second network element and the terminal device, or the like. This is not limited.

For example, a process in which the terminal device establishes a communication connection with the second network element based on the candidate authentication mechanism may be as follows. The terminal device sends a communication connection establishment request to the second network element based on the candidate authentication mechanism. The communication connection establishment request carries authentication information (for example, a key identifier of Kakma in the following) that corresponds to the candidate authentication mechanism. After receiving the communication connection establishment request, the second network element verifies the terminal device based on the authentication information. After the verification succeeds, the second network element may obtain a key used for secure communication between the terminal device and the second network element, so that a secure communication connection is established between the terminal device and the second network element. In a possible implementation, the authentication information may be a key identifier. When receiving the communication connection establishment request, the second network element may send the key identifier to a 3GPP network element. Optionally, before the key identifier is sent, mutual authentication is performed between the 3GPP network element and the second network element. After the authentication succeeds, the 3GPP network element obtains a key of the second network element based on the key identifier, and sends the key to the second network element. The second network element obtains, by interacting with the 3GPP network element, the same key shared with UE. Further, the second network element and the UE may perform further authentication and establish a communication connection based on the shared key.

Optionally, the method in embodiments of this application may further include: The terminal device sends a second message to the first network element, where the first message is a response message of the second message. It should be noted that the first network element in embodiments of this application may be a network element that can provide an identifier of another network element and a candidate authentication mechanism that corresponds to the another network element. The second network element is not limited to the ECS, the ESS, the EAS, or the like. For example, the second network element may be a network element that can enable the first network element to obtain the identifier of the second network element and the corresponding candidate authentication mechanism. The authentication mechanism in embodiments of this application may include at least one of the following: an authentication and key management for applications (authentication and key management for applications, AKMA) service, a generic bootstrapping architecture (generic bootstrapping architecture, GBA) service, a certificate mechanism, an EES credential (credential), or another mechanism used for authentication between the terminal device and the second network element. It should be noted that, if a certificate is used for the authentication between the terminal device and the second network element, at least one authentication mechanism supported by the second network element (for example, the ECS, the EES, or the EAS) in the following embodiments may be replaced with "information used to authenticate a certificate of the second network element", for example, a certificate authority (certificate authority, CA) public key, and at least one authentication mechanism supported by the terminal device may be replaced with "information used to authenticate a certificate of the UE" and the like.

### Embodiment 1

In Embodiment 1, descriptions are provided by using an example in which a terminal device is UE, the UE includes an AC and an EEC, a first network element is an ECS, a second network element is an EES, a second message is a provisioning request (provisioning request) message, and a first message is a provisioning response (provisioning response) message

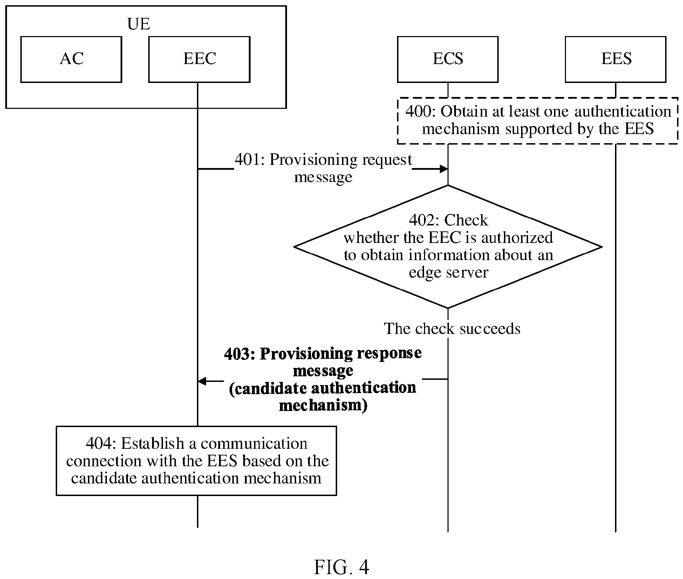

As shown in FIG. 4, a procedure of a communication method is provided. The procedure includes the following steps.

Step 400 (optional): The ECS obtains at least one authentication mechanism supported by the EES. Optionally, the ECS may further obtain priority information of one or more of the at least one authentication mechanism supported by the EES.

The ECS may obtain, through preconfiguration, the at least one authentication mechanism supported by the EES and priority information that corresponds to the at least one authentication mechanism. Alternatively, the ECS may obtain, through interaction with the EES, the at least one authentication mechanism supported by the EES, priority information that corresponds to the at least one authentication mechanism, and the like. For example, after the EES is successfully instantiated, the EES may send, to the ECS in an active registration manner, the at least one authentication mechanism supported by the EES and the priority information that corresponds to the at least one authentication mechanism. A specific manner of obtaining the information of the EES by the ECS is not limited in this embodiment of this application.

Step 401: The EEC sends a provisioning request message to the ECS, where the provisioning request message includes an identifier of the UE and application client configuration text information.

Specifically, the EEC may send the provisioning request message and the like to the ECS based on a preconfigured ECS address, a discovered ECS address, or an ECS address from the AC.

The identifier of the UE is used to uniquely identify the UE in a public land mobile network (public land mobile network, PLMN). For example, the identifier of the UE may be a generic public subscription identifier (generic public subscription identifier, GPSI). A specific implementation form of the identifier of the UE is not limited in this embodiment of this application. The application client configuration text information includes information used to determine a service required by the application client AC in the UE and a service feature, and the like. For example, the application client configuration text may include an AC ID, a type of the application client, and information indicating whether service continuity needs to be supported. The AC ID identifies a specific application on the terminal device, and the type of the application client may be a V2X type or the like.

Step 402: The ECS receives the provisioning request message. Optionally, the ECS checks whether the EEC is authorized to obtain information about an edge server.

For example, the ECS stores information about a valid EEC authorized by the ECS, and only the valid EEC authorized by the ECS can obtain the information about the edge server. In this embodiment of this application, the ECS may specifically determine whether a list of valid EECs stored in the ECS includes the EEC that sends the provisioning request message. If the list of valid EECs includes the EEC that sends the provisioning request message, the authorization check on the EEC succeeds; otherwise, the authorization check on the EEC fails. A specific manner of determining whether the EEC is authorized to obtain the information about the edge server is not limited in this embodiment.

Step 403: The ECS sends a provisioning response message to the EEC.

If the authorization check on the EEC succeeds, the provisioning response message may include an identifier of the EES and first indication information, where the first indication information indicates a candidate authentication mechanism associated with the EES. Alternatively, if the authorization check on the EEC fails, the provisioning response message may carry second indication information, where the second indication information indicates that the authorization check on the EEC fails and the like.

In a possible implementation solution, after the authorization check on the EEC succeeds, the ECS may determine, based on the application client configuration text information carried in the provisioning request message, EDN configuration information that corresponds to the application client configuration text information. The provisioning response message sent by the ECS to the EEC may carry the EDN configuration information. The EDN configuration information includes EES information, EDN connection information, and the like. The EES information includes the identifier of the EES, and the identifier of the EES may be an FQDN, a URL, an IP address, or the like of the EES. This is not limited. The EDN connection information is used to establish a PDU session between the UE and an EDN, and the EDN connection information may include a data network name (data network name, DNN), an access point name (access point name, APN), and the like. Optionally, the EDN configuration information may further include single network slice selection assistance information (single network slice selection assistance information, S-NSSAI), an EDN service area, and the like. In this embodiment of this application, the EDN configuration information may further include the first indication information indicating the candidate authentication mechanism associated with the EES, and the like.

It should be noted that, for ease of description, that a message/information carries indication information of an authentication mechanism may also be described as that a message/information carries an authentication mechanism. These two descriptions are not distinguished and may be replaced with each other. Unless otherwise specified, in the following descriptions, that a message/information carries an authentication mechanism is uniformly used for description.

Step 404: The EEC establishes a communication connection with the EES based on the candidate authentication mechanism.

To distinguish between different authentication mechanisms, in the following descriptions, three representations are used: An authentication mechanism that is determined by the ECS and that is used for communication between the UE and the EES is referred to as a first authentication mechanism; an authentication mechanism supported by the UE may be referred to as a second authentication mechanism; and an authentication mechanism supported by the EES may be referred to as a third authentication mechanism. It may be understood that, because the UE includes the AC or the EEC, in the following descriptions of this embodiment of this application, the authentication mechanism supported by the UE may sometimes be described as an authentication mechanism supported by the EEC or the AC. That the EEC or the AC establishes a communication connection with the second network element may also be described as that the UE establishes a communication connection with the second network element. Certainly, the second network element includes but is not limited to the ECS, the EES, an EAS, or the like.

In a design, the candidate authentication mechanism is at least one third authentication mechanism supported by the EES. The provisioning response message carries the at least one third authentication mechanism supported by the EES. Optionally, the provisioning response message may further carry priority information of the at least one third authentication mechanism supported by the EES. The EEC determines a target authentication mechanism based on the at least one third authentication mechanism supported by the EES and assistance information, where the assistance information includes at least one of the following: at least one second authentication mechanism supported by the UE, a network type used by the UE to access the EES, and the like. Optionally, the assistance information may further include priority information of the at least one second authentication mechanism supported by the UE and the priority information of the at least one third authentication mechanism supported by the EES.

Specifically, when the assistance information includes the at least one second authentication mechanism supported by the UE, the EEC may determine an authentication mechanism supported by both the UE and the EES as the target authentication mechanism. For example, if the at least one authentication mechanism supported by the EES includes A, B, and C, and the at least one authentication mechanism supported by the UE includes C, D, and E, the target authentication mechanism includes C.

When the assistance information includes the network type used by the UE to access the EES, the target authentication mechanism may be an authentication mechanism that corresponds to the network type. For example, the authentication mechanism supported by the EES includes an AKMA mechanism and a GBA mechanism. The AKMA mechanism is an authentication mechanism based on a 5G network, and the GBA mechanism is an authentication mechanism based on a 4G network. In this case, if the UE currently accesses the 5G network, the UE determines that the target authentication mechanism is the AKMA mechanism; or if the UE currently accesses the 4G network, the UE determines that the target authentication mechanism is the GBA mechanism.

Optionally, the EEC may further consider priority information of different authentication mechanisms, and preferentially select an authentication mechanism with a high priority. For example, when the assistance information includes the priority information of the at least one third authentication mechanism supported by the EES, the UE may preferentially select an authentication mechanism with a high priority as the target authentication mechanism.

Then, the EEC generates a first key and a first key identifier that correspond to the target authentication mechanism. In a possible implementation, the EEC may further request information that corresponds to the target authentication mechanism from a bottom layer of the terminal device. A bottom layer of the terminal device generates the first key and the first key identifier based on the information that corresponds to the target authentication mechanism, and the bottom layer of the terminal device sends the first key identifier and the like to the EEC. The EEC sends a communication connection establishment request to the EES, where the communication connection establishment request includes the first key identifier. Optionally, the bottom layer of the terminal device may further generate a second key based on the first key and the identifier of the EES, and send the second key to the EEC. The EEC performs security protection on the communication connection establishment request by using the second key, for example, generates a first message authentication code (message authentication code, MAC) based on the second key and all or some information in the communication connection establishment request. The communication connection establishment request includes the first MAC. When receiving the communication connection establishment request, the EES may obtain the first key identifier in the communication connection establishment request. The EES obtains the second key based on the first key identifier. For example, the EES may send the first key identifier to a 3GPP network element configured to support the target authentication mechanism. The 3GPP network element may obtain, based on a correspondence between a key identifier and a key, the first key that corresponds to the first key identifier, generate the second key based on the first key and the identifier of the EES, and return the second key to the EES. The EES generates a second MAC based on the second key, and compares whether the generated second MAC is the same as the first MAC carried in the communication connection establishment request. If the generated second MAC is the same as the first MAC, it may be considered that verification succeeds; otherwise, it is considered that the verification fails. That the verification performed by the EES on the UE succeeds may mean that the EES may consider that information received from the UE is not tampered with by an attacker, and the UE is valid UE verified by the 3GPP network element. Further, the UE and the EES may further negotiate, based on the second key, a security context used for subsequent communication. The security context includes an encryption key and/or an integrity protection key, a corresponding encryption algorithm, an integrity protection algorithm, and the like. In an example, the EES may send, by using an NEF, the first key identifier and the like to the 3GPP network element configured to support the target authentication mechanism. Further, in a process in which the EES obtains the second key, bidirectional authentication may be performed between the 3GPP network element and the EES, and only a valid and authenticated EES can obtain the second key that corresponds to the first key identifier

In another design, the candidate authentication mechanism is at least one first authentication mechanism used when the communication connection is established between the EEC and the EES. An implementation process of the method may be as follows: The provisioning request message may carry at least one second authentication mechanism supported by the UE. Optionally, the provisioning request message may further carry at least one of the following: priority information of at least one second authentication mechanism supported by the UE, a network type used by the UE to access the EES, and the like. The ECS determines the candidate authentication mechanism based on at least one third authentication mechanism supported by the EES and assistance information, where the assistance information at least includes the at least one second authentication mechanism supported by the UE and the network type used by the UE to access the EES. Optionally, the assistance information may further include at least one of the following: the priority information of the at least one second authentication mechanism supported by the UE, priority information of the at least one third authentication mechanism supported by the EES, and the like. The provisioning response message may carry the candidate authentication mechanism. The EEC receives the provisioning response message from the ECS, and obtains the candidate authentication mechanism in the provisioning response message. It may be understood that if the candidate authentication mechanism includes only one third authentication mechanism, the EEC may directly establish the communication connection with the EES based on the third authentication mechanism. The third authentication mechanism may be considered as a target authentication mechanism. Alternatively, when the candidate authentication mechanism includes a plurality of authentication mechanisms, the EEC may select an authentication mechanism from the plurality of authentication mechanisms, to establish the communication connection. The selected authentication mechanism is a target authentication mechanism. For a process of establishing the communication connection between the EEC and the EES, refer to the foregoing descriptions. Details are not described again.

Optionally, in the foregoing several designs, an example in which the EEC determines the target authentication mechanism based on the candidate authentication mechanism is used for description, and this is not intended to limit this application. Another module in the UE may alternatively perform a process of determining the target authentication mechanism based on the candidate authentication mechanism.

It should be noted that the descriptions of this application mainly relate to the priority information of the at least one authentication mechanism supported by the UE and the priority information of the at least one authentication mechanism supported by the EES. The priority information may be explicitly indicated. For example, a plurality of authentication mechanisms supported by the EES are respectively an authentication mechanism A, an authentication mechanism B, and an authentication mechanism C. In this case, priority information of the plurality of authentication mechanisms supported by the EES may be respectively priority information 0 of the authentication mechanism A, priority information 1 of the authentication mechanism B, and priority information 2 of the authentication mechanism C. A smaller value of the priority information indicates a higher priority corresponding to the priority information. Alternatively, the priority information may be implicitly indicated, and the priority information may also be referred to as a priority rule. The foregoing example is still used, and the foregoing three authentication mechanisms may be sorted according to the priority rule. Subsequently, the UE may determine, according to the foregoing priority sorting rule, priorities of the plurality of authentication mechanisms supported by the EES. For example, the UE and the EES may negotiate in advance that a higher priority indicates a higher ranking. It is assumed that an order of the three authentication mechanisms supported by the EES is: the authentication mechanism C, the authentication mechanism A, and the authentication mechanism B. After receiving the foregoing three authentication mechanisms, the UE may determine, based on a receiving sequence of the foregoing three authentication mechanisms, that priorities of the three authentication mechanisms are respectively: the authentication mechanism C, the authentication mechanism A, and the authentication mechanism B, and the like. For another example, the three authentication mechanisms supported by the EES may include a recommended authentication mechanism. For example, the priority information may be: the authentication mechanism C (recommended), the authentication mechanism A, and the authentication mechanism B. This indicates that the authentication mechanism C has a highest priority, the authentication mechanism A and the authentication mechanism B have second highest priorities, and the priorities of the authentication mechanism A and the authentication mechanism B are the same.

It should be noted that the foregoing examples of the priority information are merely for ease of description. During actual application, the foregoing examples of the priority information may be combined with each other to form various flexible priority rules. This is not limited in this application. For example, only an authentication mechanism with a specified high (or low) priority may be displayed, and priorities of other authentication mechanisms are determined based on an order. In this application, the priority information can reflect a priority difference between different authentication mechanisms in the at least one authentication mechanism supported by the EES or the UE.

According to the foregoing method, the EEC may obtain, by interacting with the ECS, the candidate authentication mechanism that corresponds to the EES, and the communication connection may be established between the EEC and the EES based on the candidate authentication mechanism, to reduce signaling overheads, reduce communication establishment delay, and improve communication experience.

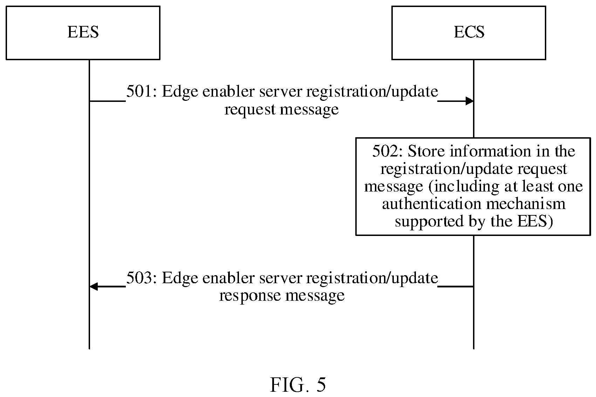

As shown in FIG. 5, a procedure of a communication method is provided. The procedure may be used by an ECS to interact with an EES to obtain at least one authentication mechanism supported by the EES. The procedure includes the following steps.

Step 501: The EES sends an edge enabler server registration/update request (edge enabler server registration/update request) message to the ECS, where the registration/update request message includes an identifier of the EES (for example, a URI, an FQDN, and an IP address), an EAS configuration, and the like.

In this embodiment of this application, the registration/update request message further includes the at least one authentication mechanism supported by the EES or an identifier of an EES provider. Optionally, the registration/update request message may further include priority information of the at least one authentication mechanism supported by the EES. The at least one authentication mechanism supported by the EES may be set by a user as required, or may be a preconfigured default value, or the like. This is not limited. In the following embodiments, at least one authentication mechanism supported by an EAS or an EC may also be set by the user as required, or may be a preconfigured default value, or the like. Details are not described subsequently.

Step 502: After receiving the registration/update request message of the EES, the ECS verifies whether the EES is authorized. If the EES is authorized, information in the registration/update request message is stored.

In a design, if the registration/update request message includes the at least one authentication mechanism supported by the EES, the ECS directly stores the at least one authentication mechanism supported by the EES. Optionally, the ECS may further store the priority information of the at least one authentication mechanism. In another design, if the registration/update request message includes the identifier of the EES provider, the ECS may determine, based on the identifier of the EES provider, the at least one authentication mechanism supported by the EES. For example, the ECS stores the at least one authentication mechanism that corresponds to the EES provider, and optionally, may further store the priority information of the at least one authentication mechanism that corresponds to the EES provider. Subsequently, the ECS may determine, based on a stored correspondence between an EES provider and an authentication mechanism, the at least one authentication mechanism supported by the EES, and optionally, may further determine the priority information of the at least one authentication mechanism.

Step 503: The ECS sends an edge enabler server registration/update response message to the EES, where the response message includes indication information indicating a registration/update success or failure. Optionally, the response message may further include expiration time indicating a time point at which the registration/update expires. Optionally, for the registration request, the response message may further include a registration ID.

According to the foregoing solution, the ECS may obtain, by interacting with the EEC, the at least one authentication mechanism supported by the EES, the priority information that corresponds to the at least one authentication mechanism, and the like.

### Embodiment 2

In Embodiment 2, descriptions are provided by using an example in which a terminal device is UE, the UE includes an AC and an EEC, a first edge server is an EES, a second edge server is an EAS, a second message is an edge enabler client registration request (edge enabler client registration request) message, and a first message is an edge enabler client registration response (edge enabler client registration response) message.

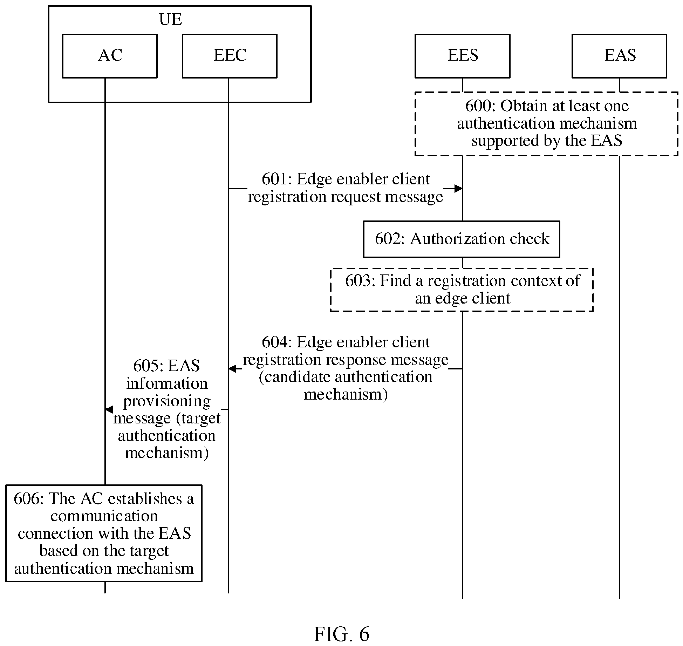

As shown in FIG. 6, a procedure of a communication method is provided. The procedure includes the following steps.

Step 600 (optional): The EES obtains at least one authentication mechanism supported by the EAS. Optionally, the EES may further obtain priority information of the at least one authentication mechanism supported by the EAS.

For example, the EES may obtain, through preconfiguration, the at least one authentication mechanism supported by the EAS and the priority information that corresponds to the at least one authentication mechanism; or the EES may obtain, through interaction with the EAS, the at least one authentication mechanism supported by the EAS and the priority information that corresponds to the at least one authentication mechanism. For example, after the EAS is successfully instantiated, the EAS may send, to the EES through active registration, the at least one authentication mechanism supported by the EAS and the priority information that corresponds to the at least one authentication mechanism. A manner of obtaining the information of the EAS by the EES is not limited in this embodiment of this application.

Step 601: The EEC sends an edge enabler client registration request message to the EES, where the request message includes an EEC ID and an application client configuration file.

Specifically, the EEC may send the edge enabler client registration request message and the like to the EES based on EES information obtained from an ECS.

The application client configuration file may include an AC ID, an EAS ID (for identifying an EAS that is requested to be discovered), an edge server provider, and the like. The EEC ID uniquely identifies an EEC. The EAS ID identifies a specific application. Optionally, the edge enabler client registration request message may further include at least one of the following: a UE ID, a context ID (context ID), an ID of the EES (which is also referred to as a source EES ID) that allocates the context ID, the EAS ID (identifying the discovered EAS), and the like. The context ID identifies a context of previous EEC registration and the like.

Step 602: The EES receives the edge client registration request message. Optionally, the EES may perform an authorization check. To be specific, the EES checks whether the EEC is authorized to request the discovered EAS.

For example, if the authorization check on the EEC succeeds, an edge enabler client registration response message in the following step 604 may carry the ID of the EAS that is authorized to be discovered and first indication information that indicates a candidate authentication mechanism associated with the EAS that is authorized to be discovered. Otherwise, the edge enabler client registration response message in the following step 604 may carry second indication information indicating that the request fails, and the like.

Step 603 (optional): After the authorization check on the EEC succeeds, if the edge enabler client registration request message in step 601 includes the context ID and the source EES ID, the EES obtains a registration context from a source EES. If the request message does not include the context ID and the source EES ID, this step is skipped. The EES obtains the registration context according to a normal procedure.

The foregoing step 603 is mainly designed for a movement scenario. For example, if a user moves from Shanghai to Beijing, an EDN network in Beijing instead of an EDN network in Shanghai provides a service for the user. The EDN network in Beijing can obtain related information from the EDN network in Shanghai.

Step 604: The EES sends the edge enabler client registration response message to the EEC.

In a possible implementation solution, if the authorization check on the EEC succeeds, the edge enabler client registration response message may include an EAS information list. For example, after the authorization check on the EEC succeeds, the EES may determine, based on the registration context, the EAS information list indicated by the client configuration file. The EAS information list includes the EAS ID and the like. The EAS ID is used by the AC to send a request to the EAS. Optionally, the EAS information list may further include an identifier of an EAS provider, a storage available for the EAS, and the like. In this embodiment of this application, the EAS information list may further include a candidate authentication mechanism that corresponds to the EAS.

To distinguish between different authentication mechanisms, in the following descriptions, three representations are used: an authentication mechanism that is determined by the EES and that is used for communication between the UE and the EAS is referred to as a first authentication mechanism; an authentication mechanism supported by the UE may be referred to as a second authentication mechanism; and an authentication mechanism supported by the EAS may be referred to as a third authentication mechanism.

In a design, the candidate authentication mechanism is at least one third authentication mechanism supported by the EAS. The edge enabler client registration response message includes the at least one third authentication mechanism supported by the EAS. Optionally, the edge enabler client registration response message may further include priority information of the at least one third authentication mechanism supported by the EAS. The EEC receives the edge enabler client registration response message, and obtains the at least one third authentication mechanism supported by the EAS in the edge enabler client registration response message. Optionally, the EEC may further obtain the priority information of the at least one third authentication mechanism supported by the EAS. The EEC determines a target authentication mechanism based on the at least one authentication mechanism supported by the EAS and assistance information, where the assistance information includes at least one of the following: at least one second authentication mechanism supported by the UE, and a network type used by the UE to access the EAS. Optionally, the assistance information may further include at least one of the following: priority information of at least one authentication mechanism supported by the UE and the priority information of the at least one authentication mechanism supported by the EAS. Optionally, the EEC may obtain, from a non-access stratum (non-access stratum, NAS) layer or another layer, the priority information of the at least one authentication mechanism supported by the UE, the network type used by the UE to access the EAS, or the like. Then, the EEC sends an EAS information provisioning message to the AC, where the EAS information provisioning message includes the candidate authentication mechanism. The AC establishes a communication connection with the EAS based on the target authentication mechanism, where the target authentication mechanism is included in one of the at least one third authentication mechanism. A process of establishing the communication connection between the AC and the EAS is similar to a process of establishing a communication connection between the EEC and the EES. Reference may be made to each other.

In another design, the candidate authentication mechanism is at least one third authentication mechanism supported by the EAS. The edge enabler client registration response message includes the at least one third authentication mechanism supported by the EAS. Optionally, the edge enabler client registration response message may further include priority information of the at least one third authentication mechanism supported by the EAS. The EEC receives the edge enabler client registration response message, and obtains the at least one third authentication mechanism supported by the EAS in the edge enabler client registration response message. Optionally, the EEC may further obtain the priority information of the at least one authentication mechanism supported by the EAS. The EEC sends the at least one third authentication mechanism supported by the EAS to the AC. Optionally, the EEC may further send, to the AC, the priority information of the at least one authentication mechanism supported by the EAS. The AC determines a target authentication mechanism based on the at least one third authentication mechanism supported by the EAS and assistance information, where the assistance information includes at least one of the following: at least one second authentication mechanism supported by the UE, and a network type used by the UE to access the EAS. Optionally, the assistance information may further include at least one of the following: priority information of the at least one second authentication mechanism supported by the UE and the priority information of the at least one third authentication mechanism supported by the EAS. For example, the AC may obtain, from a NAS layer or another layer, the priority information of the at least one second authentication mechanism supported by the UE, and/or a network type used by the UE to access the EAS. Then, the AC establishes a communication connection with the EAS based on the target authentication mechanism. A process of establishing the communication connection between the AC and the EAS is similar to a process of establishing a communication connection between the EEC and the EES. Reference may be made to each other.

In another design, the candidate authentication mechanism is at least one first authentication mechanism used when a communication connection is established between the AC and the EAS. The edge enabler client registration request message includes capability information of the UE, and the capability information of the UE includes at least one second authentication mechanism supported by the UE. Optionally, the capability information of the UE may further include a network type used by the UE to access the EAS and priority information of the at least one authentication mechanism supported by the UE. The EES determines the candidate authentication mechanism based on at least one third authentication mechanism supported by the EAS and assistance information, where the assistance information includes at least one of the following: the at least one second authentication mechanism supported by the UE and the at least one third authentication mechanism supported by the EAS. Optionally, the assistance information may further include at least one of the following: the priority information of the at least one second authentication mechanism supported by the UE and priority information of the at least one third authentication mechanism supported by the EAS. The EES sends the edge client registration response message to the EEC, where the edge client registration response message includes the candidate authentication mechanism. If the candidate authentication mechanism includes an authentication mechanism, the authentication mechanism is used as a target authentication mechanism. Alternatively, if the candidate authentication mechanism includes a plurality of authentication mechanisms, one authentication mechanism may be selected from the plurality of authentication mechanisms as a target authentication mechanism. Then, the EEC may send an EAS information provisioning message to the AC, where the EAS information provisioning message includes the target authentication mechanism. The AC establishes the communication connection with the EAS based on the target authentication mechanism. Alternatively, the EEC may directly send the candidate authentication mechanism to the AC, and the AC determines the target authentication mechanism based on the candidate authentication mechanism. This is not limited.

It should be noted that in the foregoing several designs, an example in which the EEC or the AC determines the target authentication mechanism based on the candidate authentication mechanism is used for description. This is not intended to limit this embodiment of this application. For example, in this embodiment of this application, another module in the UE may alternatively perform the foregoing process of determining the target mechanism based on the candidate authentication mechanism. A difference lies in that the foregoing another module needs to finally notify the AC of the target authentication mechanism.

Step 605: The EEC sends the EAS information provisioning message to the AC, where the EAS information provisioning message includes the target authentication mechanism that is of the EAS and that corresponds to the AC, or includes the candidate authentication mechanism that is of the EAS and that corresponds to the AC.

Step 606: When initiating a request to the EAS, the AC establishes the communication connection with the EAS based on the candidate authentication mechanism or the target authentication mechanism that corresponds to the EAS and that is received from the EEC.

It can be learned from the foregoing descriptions that, the UE may obtain, by interacting with the EES, the candidate authentication mechanism that corresponds to the EAS, and no authentication negotiation procedure needs to be performed between the EEC and the EAS. This reduces signaling overheads, reduces a communication establishment delay, and improves communication experience.

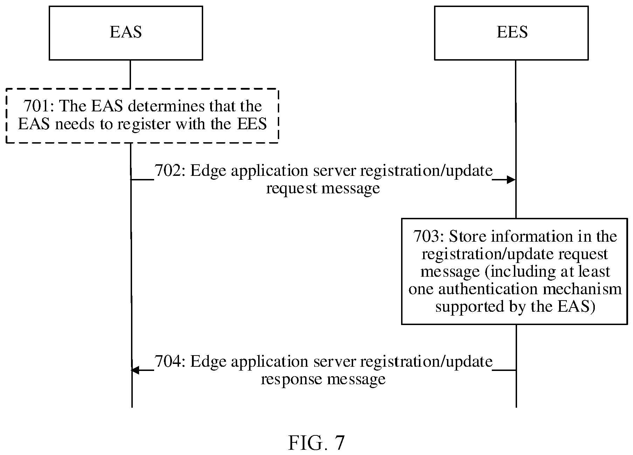

As shown in FIG. 7, a procedure of a communication method is provided. The procedure may be used by an EES to interact with an EAS to obtain at least one authentication mechanism supported by the EAS. The procedure includes the following steps.

Step 701 (optional): The EAS determines that the EAS needs to register with the EES.

Step 702: The EAS sends an edge application server registration/update request (edge application server registration/update request) message to the EES. The registration/update request message includes at least one of the following: an identifier of the EAS and an EAS configuration. Optionally, the registration/update request message may further include an EAS service area, an EAS type, and the like.

In a design, the registration/update request message includes the at least one authentication mechanism supported by the EAS. In another design, the registration/update request message includes an ID of an EAS provider. Optionally, the registration/update request message may further include priority information of the at least one authentication mechanism supported by the EAS.

Step 703: After receiving the registration/update request message from the EAS, the EES performs an authorization check on the EAS to check whether the EAS is authorized. If the EAS is authorized, information in the registration/update request message is stored.

In a design, if the registration/update request message includes the at least one authentication mechanism supported by the EAS, the EES directly stores the at least one authentication mechanism supported by the EAS. In another design, if the registration/update request message includes the ID of the EAS provider, the EES may determine, based on a correspondence between a provider and an authentication mechanism, at least one authentication mechanism that corresponds to the ID of the EAS provider. The at least one authentication mechanism that corresponds to the provider ID may be considered as the at least one authentication mechanism supported by the EAS.

Step 704: The EES sends an edge application server registration/update response message to the EAS, where the response message includes indication indicating a registration/update success or failure. Optionally, the response message may further include expiration time indicating a time point at which the registration/update expires. For the registration request, the response message may further include a registration ID. Optionally, the EES may further store the priority information of the at least one authentication mechanism supported by the EAS.

According to the foregoing solution, the EES may obtain, by interacting with the EAS, the at least one authentication mechanism supported by the EAS and the priority information that corresponds to the at least one authentication mechanism.

### Embodiment 3

In Embodiment 3, the solution in this embodiment of this application is described by using an example in which a terminal device is UE, a first network element is an AMF, a second message is a registration request message of the terminal device, and a first message is a registration request response message of the terminal device.

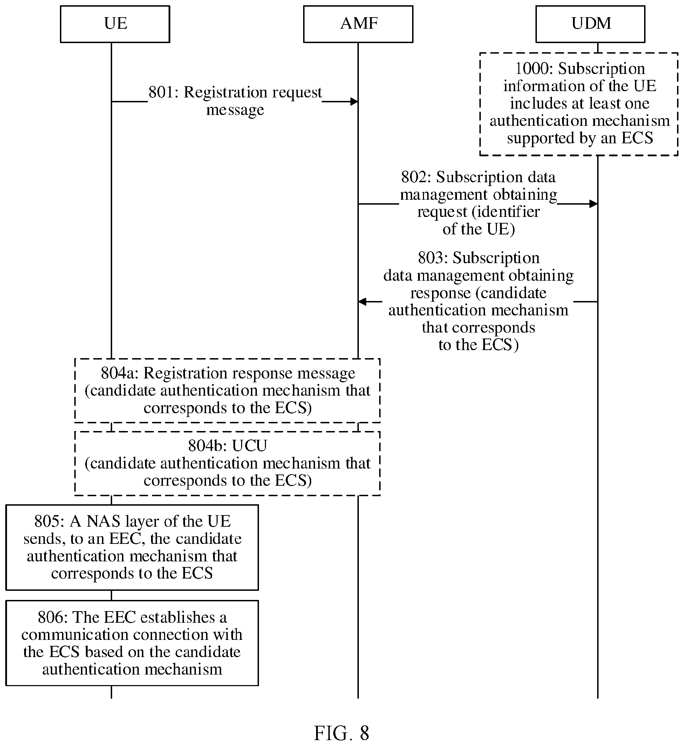

As shown in FIG. 8, a procedure of a communication method is provided. The procedure includes at least the following steps.

Step 800 (optional): For UE that subscribes to and uses an edge service, access and mobility management user subscription information of a UDM includes ECS information that can be used by the UE, and the ECS information includes at least one of the following: an identifier of an ECS and at least one authentication mechanism supported by the ECS. Optionally, the ECS information may further include priority information of the at least one authentication mechanism supported by the ECS.

Step 801: The UE sends a registration request message to the AMF via an access network node, where the registration request message includes an identifier of the UE. Optionally, the registration request message may further include at least one of the following: at least one authentication mechanism supported by the UE, indication information indicating whether the UE supports an edge enabler client, and priority information of the at least one authentication mechanism supported by the UE.

For example, in a possible implementation, the registration request message includes the identifier of the UE and a capability of the UE. The identifier of the UE may be a subscription concealed identifier (subscription concealed identifier, SUCI), a globally unique temporary identity (globally unique temporary identity, 5G-GUTI), a mapped 5G-GUTI, or the like. The capability of the UE includes at least one of the following: the at least one authentication mechanism supported by the UE, the indication information indicating whether the UE supports the edge enabler client, and the priority information of the at least one authentication mechanism supported by the UE.

Step 802: After receiving the registration request message of the UE, when the AMF needs to obtain the subscription information, the AMF may send a subscription data management obtaining request (Nudm_subscriber data management get, Nudm_SDM_Get) request message to the UDM, where the request message includes an identifier of the UE. Optionally, the request message may further include capability information of the UE. The identifier of the UE is determined based on the identifier of the UE in step 801, and may be a subscription permanent identifier (subscription permanent identifier, SUPI).

Step 803: The UDM obtains the subscription information of the UE based on the identifier of the UE included in the Nudm_SDM_Get request message, and sends a Nudm_SDM_Get response message to the AMF, where the response message includes the ECS information, and the ECS information includes at least one of the following: the identifier of the ECS and candidate authentication information associated with the ECS. How the UDM obtains the candidate authentication information that corresponds to the ECS is described in detail in the following embodiments.

Step 804: The AMF receives the Nudm_SDM_Get response message sent by the UDM, obtains the ECS information in the response message, and sends the ECS information to the UE. In a design, the AMF may send the ECS information to the UE by using a registration response message, and reference may be made to step 804a. Alternatively, the AMF may send the ECS information to the UE by using an independent configuration procedure: a UE configuration update (UE configuration update, UCU) procedure, and reference may be made to step 804b.

Step 805: A NAS layer of the UE sends the received ECS information to a corresponding EEC. The NAS layer may directly send the received ECS information to the EEC, or indirectly send the ECS information to the EEC through an upper layer.

Step 806: The EEC establishes a communication connection with the ECS based on a candidate authentication mechanism included in the ECS information.

To distinguish between different authentication mechanisms, in the following descriptions, four representations are used: An authentication mechanism that is determined by the AMF and that is used for communication between the UE and the ECS is referred to as a first authentication mechanism; an authentication mechanism supported by the UE may be referred to as a second authentication mechanism; an authentication mechanism supported by the ECS may be referred to as a third authentication mechanism; and an authentication mechanism that is determined by the UDM and that is used for communication between the UE and the ECS is referred to as a fourth authentication mechanism.

In a design, the candidate authentication mechanism is at least one third authentication mechanism supported by the ECS. The Nudm_SDM_Get response message includes the at least one third authentication mechanism supported by the ECS. Optionally, the Nudm_SDM_Get response message may further include priority information of the at least one third authentication mechanism supported by the ECS. When receiving the Nudm_SDM_Get response message, the AMF obtains the at least one third authentication mechanism supported by the ECS. Optionally, the AMF may further obtain the priority information of the at least one third authentication mechanism supported by the ECS. The AMF sends the registration response message or the UCU procedure to the UE, where the registration response message or the UCU procedure carries the at least one third authentication mechanism supported by the ECS. Optionally, the response message or the UCU procedure may further include the priority information of the at least one third authentication mechanism supported by the ECS. The UE determines a target authentication mechanism based on the at least one third authentication mechanism supported by the ECS and assistance information, where the assistance information at least includes: at least one second authentication mechanism supported by the UE, and a network type used by the UE to access the ECS. Optionally, the assistance information may further include at least one of the following: priority information of the at least one authentication mechanism supported by the UE and the priority information of the at least one authentication mechanism supported by the ECS. Then, the UE establishes a communication connection with the ECS based on the target authentication mechanism. A process of establishing the communication connection between the UE and the ECS is similar to a process of establishing a communication connection between the EEC and an EES. Reference may be made to each other.

Optionally, the establishing the communication connection between the UE and the ECS may further be described as establishing the communication connection between the EEC and the ECS. Specifically, the NAS layer of the UE may perform the foregoing process of "determining the target authentication mechanism based on the at least one authentication mechanism supported by the ECS and the assistance information", then the NAS layer sends the target authentication mechanism to the EEC, and the EEC establishes the communication connection with the ECS based on the target authentication mechanism.

In another design, the candidate authentication mechanism is at least one first authentication mechanism used when the EEC communicates with the ECS. The registration request message may carry the capability information of the UE. The capability information of the UE includes at least one second authentication mechanism supported by the UE, a network type used by the UE to access the ECS, and priority information of the at least one second authentication mechanism supported by the UE. The AMF receives the registration request message and obtains the capability of the UE. When the AMF needs to obtain the subscription information, the AMF sends the Nudm_SDM_Get request message to the UDM. The AMF receives the Nudm_SDM_Get response message from the UDM. The Nudm_SDM_Get response message includes at least one third authentication mechanism supported by the ECS. Optionally, the response message may further include priority information of the at least one third authentication mechanism supported by the ECS. The AMF determines the candidate authentication mechanism based on the at least one third authentication mechanism supported by the ECS and assistance information. Optionally, the assistance information at least includes at least one of the following: the at least one second authentication mechanism supported by the UE, and the network type used by the UE to access the ECS. Optionally, the assistance information may further include the priority information of the at least one second authentication mechanism supported by the UE and the priority information of the at least one authentication mechanism supported by the ECS. The AMF sends the registration response message or the UCU procedure to the UE, where the registration response message or the UCU procedure includes the candidate authentication mechanism. The UE obtains the candidate authentication mechanism in the registration response message or the UCU procedure, and determines a target authentication mechanism based on the candidate authentication mechanism. For example, the candidate authentication mechanism may include a plurality of the first authentication mechanisms, and the UE may select one of the first authentication mechanisms as the target authentication mechanism. Then, the NAS layer of the UE may send the target authentication mechanism to the EEC, and the EEC establishes the communication connection with the ECS based on the target authentication mechanism. Alternatively, when receiving the candidate authentication mechanism, the UE may directly send the candidate authentication mechanism to the EEC, and the EEC determines the target authentication mechanism based on the candidate authentication mechanism.

In still another design, the candidate authentication mechanism is at least one fourth authentication mechanism used when the EEC communicates with the ECS. The registration request message may carry the capability information of the UE. The capability information of the UE includes at least one second authentication mechanism supported by the UE, a network type used by the UE to access the ECS, and priority information of the at least one second authentication mechanism supported by the UE. The AMF receives the registration request message and obtains the capability of the UE. When the AMF needs to obtain the subscription information, the AMF sends the Nudm_SDM_Get request message to the UDM. The Nudm_SDM_Get request message sent to the UDM carries the capability information of the UE. The UDM determines the candidate authentication mechanism based on at least one authentication mechanism supported by the ECS and assistance information, where the assistance information at least includes the at least one second authentication mechanism supported by the UE and the network type used by the UE to access the ECS. Optionally, the assistance information may further include at least one of the following: the priority information of the at least one authentication mechanism supported by the UE, priority information of the at least one authentication mechanism supported by the ECS, and the like. The UDM sends the Nudm_SDM_Get response message to the AMF. The response message includes the candidate authentication mechanism. Then, the AMF sends the candidate authentication mechanism to the UE by using the registration response message or the UCU procedure. A process is similar to that in the foregoing solution. Details are not described again.

In this embodiment of this application, the UE may interact with the AMF to obtain the candidate authentication mechanism that corresponds to the ECS, and no authentication negotiation procedure needs to be performed between the UE and the ECS. This reduces signaling overheads, reduces a communication establishment delay, and improves communication experience.

### Embodiment 4

In Embodiment 4, the solution in this embodiment of this application is described by using an example in which a terminal device is UE, a first network element is an SMF, a second message is a PDU session request message, and a first message is a PDU session response message.

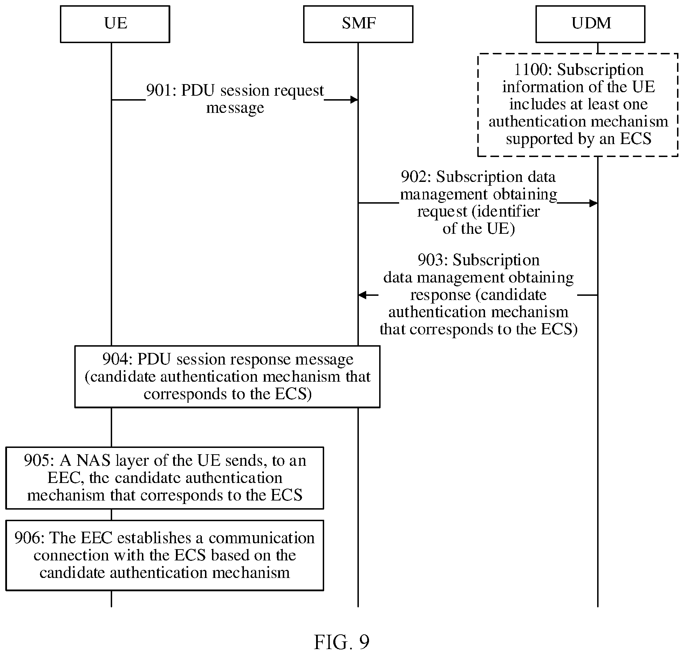

As shown in FIG. 9, a procedure of a communication method is provided. The procedure includes at least the following steps.

Step 900 (optional): For UE that supports use of an edge service, session management user subscription information of a UDM includes ECS information that can be used by the UE, and the ECS information includes at least one of the following: an identifier of an ECS, at least one authentication mechanism supported by the ECS, and the like. Optionally, the ECS information may further include priority information of the at least one authentication mechanism supported by the ECS.

Step 901: When the UE determines to establish a PDU session, the UE sends a PDU session request message to the SMF through a radio access network node and an AMF node, where the message includes a PDU session ID. Optionally, the message may further include at least one of the following: indication information indicating whether the UE supports an edge enabler client, at least one authentication mechanism supported by the UE, and priority information of the at least one authentication mechanism supported by the UE.

For example, in a possible implementation solution, the PDU session request message may include a capability of the UE. The capability of the UE includes at least one of the following: the at least one authentication mechanism supported by the UE, the indication information indicating whether the UE supports the edge enabler client, and the priority information of the at least one authentication mechanism supported by the UE. Alternatively, the capability of the UE may be sent separately. To be specific, the UE sends the PDU session request message and the capability of the UE to the SMF through the radio access network node and the AMF node.

Step 902: After receiving the PDU session request message sent by the UE, when the SMF needs to obtain subscription information of the UE, the SMF sends a Nudm_SDM_Get request message to the UDM, where the request message includes an identifier of the UE. The identifier of the UE may be an SUPI.

Step 903: The UDM obtains the subscription information of the UE based on the identifier of the UE included in the request message, and sends a Nudm_SDM_Get response message to the AMF, where the response message includes the ECS information. The ECS information includes at least one of the following: the identifier of the ECS and a candidate authentication mechanism that corresponds to the ECS.

Step 904: The SMF receives the Nudm_SDM_Get response message sent by the UDM, and sends a PDU session response message to the UE, where the PDU session response message includes the ECS information. In a possible solution, the ECS information may be included in a protocol configuration option (protocol configuration option, PCO) of the PDU session response message.

Step 905: A NAS layer of the UE sends the received ECS information to a corresponding EEC. Optionally, the NAS layer may directly send the received ECS information to the EEC, indirectly send the ECS information to the EEC through an upper layer, or the like.

Step 906: The EEC establishes a communication connection with the ECS based on the candidate authentication mechanism included in the received ECS information.

To distinguish between different authentication mechanisms, in the following descriptions, four representations are used: an authentication mechanism that is determined by the SMF and that is used for communication between the UE and the ECS is referred to as a first authentication mechanism; an authentication mechanism supported by the UE may be referred to as a second authentication mechanism; an authentication mechanism supported by the ECS may be referred to as a third authentication mechanism; and an authentication mechanism that is determined by the UDM and that is used for communication between the UE and the ECS is referred to as a fourth authentication mechanism.

In a design, the candidate authentication mechanism is at least one third authentication mechanism supported by the ECS. The ECS information in the Nudm_SDM_Get response message includes the at least one third authentication mechanism supported by the ECS. Optionally, the message further includes priority information of the at least one third authentication mechanism supported by the ECS. The SMF receives the Nudm_SDM_Get response message, and obtains the at least one third authentication mechanism supported by the ECS included in the Nudm_SDM_Get response message. Optionally, the SMF may further obtain the priority information that is of the at least one third authentication mechanism supported by the ECS and that is included in the response message. The SMF sends the PDU session response message to the UE, where the PDU session response message includes the at least one third authentication mechanism supported by the ECS. Optionally, the PDU session response message may further include the priority information of the at least one third authentication mechanism supported by the ECS. The UE determines a target authentication mechanism based on the at least one third authentication mechanism supported by the ECS and assistance information, where the assistance information at least includes: at least one second authentication mechanism supported by the UE, and a network type used by the UE to access the ECS. Optionally, the assistance information may further include: the priority information of the at least one authentication mechanism supported by the UE, the priority information of the at least one authentication mechanism supported by the ECS, and the like. Then, the NAS layer of the UE sends the target authentication mechanism to the EEC, and the EEC establishes the communication connection with the ECS based on the target authentication mechanism. A process of establishing the communication connection between the EEC and the ECS is similar to a process of establishing a communication connection between the EEC and the EES. Reference may be made to each other. In a possible solution, specifically, the NAS layer of the UE may perform the foregoing process of "determining the target authentication mechanism based on the at least one third authentication mechanism supported by the ECS and the assistance information", and then the NAS layer sends the target authentication mechanism to the EEC, and the EEC establishes the communication connection with the ECS based on the target authentication mechanism.

In another design, the candidate authentication mechanism is at least one fourth authentication mechanism used when the UE communicates with the ECS. The PDU session request carries capability information of the UE, and the capability information of the UE includes at least one of the following: at least one second authentication mechanism supported by the UE, a network type used by the UE to access the ECS, and priority information of the at least one second authentication mechanism supported by the UE. When the SMF needs to obtain the subscription information of the UE, the SMF sends the Nudm_SDM_Get request message to the UDM. The request message includes the identifier of the UE. In a possible solution, the Nudm_SDM_Get request message includes the capability of the UE, and the UDM determines the candidate authentication mechanism based on at least one third authentication mechanism supported by the ECS and assistance information. The assistance information may include at least one of the following: the at least one second authentication mechanism supported by the UE and the network type used by the UE to access the ECS. Optionally, the assistance information may further include at least one of the following: the priority information of the at least one authentication mechanism supported by the UE and the priority information of the at least one authentication mechanism supported by the ECS. The UDM sends the Nudm_SDM_Get response message to the SMF. The response message includes the candidate authentication mechanism. The SMF sends the PDU session response message to the UE, where the PDU session response message includes the candidate authentication mechanism. The UE obtains the candidate authentication mechanism in the PDU session response message, and the NAS layer of the UE sends the candidate authentication mechanism to the EEC. The EEC establishes the communication connection with the ECS based on the candidate authentication mechanism, and the like.

In another design, the candidate authentication mechanism is at least one fourth authentication mechanism used when the UE communicates with the ECS. The PDU session request carries capability information of the UE. When the SMF needs to obtain the subscription information of the UE, the SMF sends the Nudm_SDM_Get request message to the UDM. The request message includes the identifier of the UE. The Nudm_SDM_Get response message includes at least one third authentication mechanism supported by the ECS. The SMF determines the candidate authentication mechanism based on the at least one third authentication mechanism supported by the ECS and assistance information. The SMF sends the PDU session response message to the UE, where the PDU session response message includes the candidate authentication mechanism. The NAS layer of the UE sends the candidate authentication mechanism to the EEC. The EEC establishes the communication connection with the ECS based on the candidate authentication mechanism.

In this embodiment of this application, the UE may interact with the SMF to obtain the candidate authentication mechanism that corresponds to the ECS, and no authentication negotiation procedure needs to be performed between the UE and the ECS. This reduces signaling overheads, reduces a communication establishment delay, and improves communication experience.

### Embodiment 5

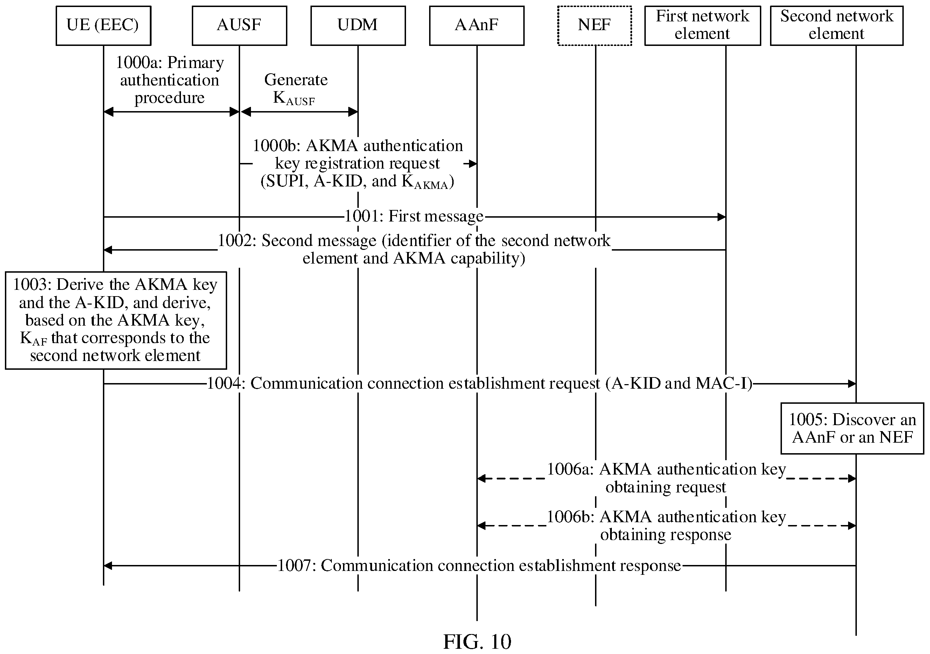

In this embodiment, an example in which a terminal device is UE is used to describe a process of establishing a communication connection between the terminal device and a first network element by using an AKMA authentication mechanism. As shown in FIG. 10, the process includes at least the following steps.

Step 1000a: The UE registers with an operator network, and performs a primary authentication procedure. In the primary authentication procedure, the UE and an AUSF separately generate an authentication key K_{AUSF}. If the UE can use the AKMA authentication mechanism (for example, the AUSF may determine, based on an AKMA indication received from a UDM, that the UE can use the AKMA authentication mechanism), after the primary identity authentication process succeeds, the AUSF generates, according to a definition in TS33.535, an AKMA key (K_{AKMA}) and an identifier A-KID that corresponds to the AKMA key.

Step 1000b: After the AKMA key is generated, the AUSF sends an AKMA authentication key registration request to an AAnF, where the request includes a subscription permanent identifier SUPI of the UE, the A-KID, and the K_{AKMA}.

Step 1001: At any moment after the UE accesses the network, when the UE needs to obtain an edge service, the UE sends a first message to the first network element.

Step 1002: The first network element sends a second message to the UE based on the first message sent by the UE, where the second message includes an identifier of a second network element and an AKMA capability. The AKMA capability indicates that the second network element supports use of the AKMA authentication mechanism.

Step 1003: When the UE determines to communicate with the second network element, if the UE supports the AKMA, and the second network element also supports the AKMA (optionally, whether the second network element supports the AKMA may be determined based on the indication in step 1002), the UE derives the AKMA key and the A-KID according to the definition in TS33.535, and further derives, based on the AKMA key, a K_{AF} that corresponds to the second network element. For the derivation, refer to a K_{AF} derivation method in TS33.535. It should be noted that a subscript AF of the K_{AF} represents the second network element. If the second network element is an EES, the K_{AF} represents a K_{EES}, or the like. Similarly, if the second network element is an ECS, an EAS, or the like, the subscript in the K_{AF} needs to be changed from "AF" to "ECS", "EAS", or the like. For the UE that supports the AKMA, the derivation of the AKMA key and the A-KID may be performed at any time after the primary authentication procedure and before the UE determines to communicate with the second network element by using the AKMA. In another possible implementation, before determining to communicate with the second network element, the UE has derived the AKMA key and the A-KID. In this case, the UE obtains the locally stored A-KID based on that the second network element supports the AKMA authentication mechanism, and includes the A-KID in step 1004. Further, the UE generates, based on the locally stored AKMA key, the K_{AF} that corresponds to the second network element.

Step 1004: The UE generates a MAC-I by using the K_{AF} and all or some information in a communication connection establishment request message, includes the MAC-I in the communication connection establishment request message, and sends, to the second network element, a communication connection establishment request including the A-KID and the MAC-I.

Step 1005: After receiving the communication connection establishment request, the second network element discovers an AKMA anchor function (AKMA Anchor Function, AAnF) or an NEF.

Step 1006: The second network element obtains a K_{AF} key that corresponds to the UE. In a possible implementation, with reference to step 1006a, the second network element sends an AKMA authentication key obtaining request to the AAnF, and the AAnF sends an AKMA authentication key obtaining response to the second network element, where the response includes the K_{AF} key and the like.

Step 1007: If the UE is authorized to perform an operation, the second network element verifies the MAC-I by using the K_{AF}, and the second network element sends a response message of the communication connection establishment request to the UE.

Optionally, the method further includes: The second network element receives the communication connection establishment request, obtains the A-KID and the MAC-I in the communication connection establishment request, and sends the A-KID to the AAnF. If the K_{AF} can be obtained, it indicates that the second network element determines that the UE is valid, that is, the second network element completes authentication on the UE.

Optionally, the method further includes: The response message of the communication connection establishment request returned by the second network element to the UE may further include a second MAC. The second MAC is generated by using the K_{AF} or a key generated based on the K_{AF}. The UE receives the response message of the communication connection establishment request, obtains the second MAC in the response message, and verifies the second MAC. After the verification succeeds, the UE determines that the second network element is valid, that is, the UE completes authentication on the second network element. Further, optionally, the second MAC is generated by using the K_{AF} or by using the key generated based on the K_{AF} and some or all information in the response message

It may be understood that, in Embodiment 1, the first network element may be an ECS, and the second network element may be an EES. Alternatively, in Embodiment 2, the first network element may be an EES, and the second network element may be an EAS. Alternatively, in Embodiment 3, the first network element is an AMF, and the second network element is an ECS. Alternatively, in Embodiment 4, the first network element may be an SMF, and the second network element may be an ECS.

It can be learned from the foregoing descriptions that dual authentication may be performed between the first network element and the second network element, so that a secure communication connection is established between the first network element and the second network element.

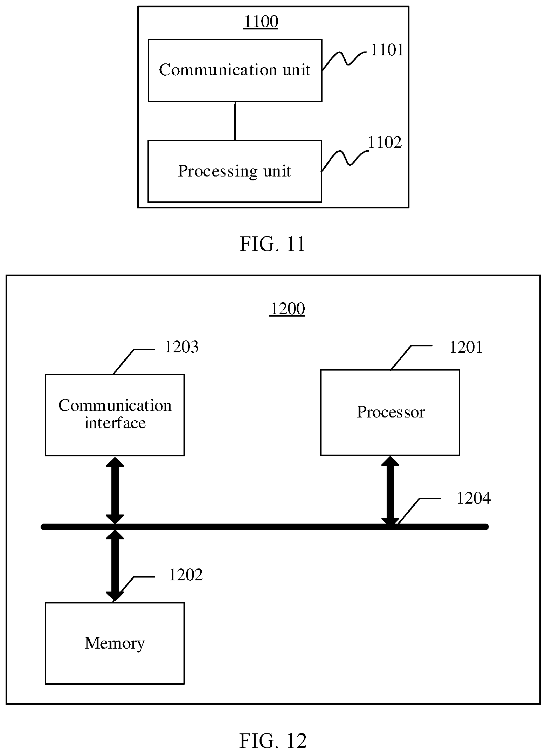

Based on a same invention concept as the foregoing method embodiments, an embodiment of this application further provides an apparatus that is configured to perform the method performed by the terminal device in the foregoing method embodiments. For related features, refer to the foregoing method embodiments. Details are not described herein again. As shown in FIG. 11, the apparatus may include a communication unit 1101 and a processing unit 1102.

The communication unit 1101 is configured to receive a first message from a first network element, where the first message includes an identifier of a second network element and first indication information, and the first indication information indicates a candidate authentication mechanism associated with the second network element. The processing unit 1102 is configured to establish a communication connection with the second network element based on the candidate authentication mechanism.

Optionally, the communication unit 1101 is further configured to send a second message to the first network element, where the first message is a response message of the second message.

In a possible design, the candidate authentication mechanism is at least one first authentication mechanism used when a terminal device establishes a communication connection with the second network element.

Optionally, the second message includes a network type used by the terminal device to access the second network element, and the at least one first authentication mechanism is an authentication mechanism that corresponds to the network type.

Optionally, the second message includes at least one second authentication mechanism supported by the terminal device, and the at least one first authentication mechanism is included in the at least one second authentication mechanism.

Optionally, the second message further includes priority information of the at least one second authentication mechanism, and the at least one second authentication mechanism is used for selecting the at least one first authentication mechanism.

Optionally, the establishing a communication connection with the second network element based on the candidate authentication mechanism includes:
A first key and a first key identifier that correspond to a target authentication mechanism are generated, where the target authentication mechanism is one of the at least one first authentication mechanism. A communication connection establishment request is sent to the second network element, where the communication connection establishment request includes the first key identifier.

In another design, the candidate authentication mechanism is at least one third authentication mechanism supported by the second network element.

Optionally, the establishing a communication connection with the second network element based on the candidate authentication mechanism includes: A target authentication mechanism is determined based on the at least one third authentication mechanism and assistance information. The assistance information includes at least one of the following: at least one second authentication mechanism supported by the terminal device and a network type used by the terminal device to access the second network element. A first key and a first key identifier that correspond to the target authentication mechanism are generated. A communication connection establishment request is sent to the second network element, where the communication connection establishment request includes the first key identifier

Optionally, the assistance information further includes at least one of the following: priority information of the at least one second authentication mechanism and priority information of the at least one third authentication mechanism.

Optionally, the first message further includes the priority information of the at least one third authentication mechanism.

Optionally, the processing unit 1102 is further configured to generate a second key based on the first key and the identifier of the second network element.

Optionally, the processing unit 1102 is further configured to perform security protection on the communication connection establishment request by using the second key, to generate a first message authentication code MAC, where the communication connection establishment request further includes the first MAC.

In a design, the first network element is an edge configuration server ECS, and the second network element is an edge enabler server EES; or the first network element is an EES, and the second network element is an edge application server EAS.

In another design, the first network element is an access and mobility management function AMF or a session management function SMF, and the second network element is an edge configuration server ECS.

Optionally, the first message is a non-access stratum NAS message.

Optionally, the first message is a response message for the terminal device to request registration or a response message for the terminal device to request to establish a protocol data unit PDU session.

Optionally, the candidate authentication mechanism includes at least one of the following: an authentication and key management for applications AKMA service, a generic bootstrapping architecture GBA service, and a certificate mechanism.

Based on a same invention concept as the foregoing method embodiments, an embodiment of this application further provides an apparatus that is configured to perform the method performed by the first network element in the foregoing method embodiments. For related features, refer to the foregoing method embodiments. Details are not described herein again. Still with reference to FIG. 11, the apparatus includes a communication unit 1101 and a processing unit 1102.

The processing unit 1102 is configured to determine a candidate authentication mechanism. The communication unit 1101 is configured to send a first message to a terminal device, where the first message includes an identifier of a second network element and first indication information, the first indication information indicates a candidate authentication mechanism associated with the second network element, and the candidate authentication mechanism is used by the terminal device to establish a communication connection with the second network element.

Optionally, the communication unit 1101 is further configured to receive a second message from the terminal device, where the first message is a response message of the second message.

Optionally, the candidate authentication mechanism is at least one first authentication mechanism used when the terminal device establishes the communication connection with the second network element. The determining a candidate authentication mechanism includes:
The candidate authentication mechanism is determined based on at least one third authentication mechanism supported by the second network element and assistance information, where the assistance information includes at least one of the following: at least one second authentication mechanism supported by the terminal device and a network type used by the terminal device to access the second network element.

Optionally, the second message includes the network type used by the terminal device to access the second network element.

Optionally, the second message includes the at least one second authentication mechanism supported by the terminal device.

Optionally, the assistance information further includes at least one of the following: priority information of the at least one second authentication mechanism and priority information of the at least one third authentication mechanism.

Optionally, the second message further includes the priority information of the at least one second authentication mechanism.

Optionally, the candidate authentication mechanism is the at least one third authentication mechanism supported by the second network element.

Optionally, the first message further includes the priority information of the at least one third authentication mechanism.

In a design, the first network element is an ECS, and the second network element is an EES; or the first network element is an EES, and the second network element is an EAS.

In another design, the first network element is an AMF or an SMF, and the second network element is an ECS.

Optionally, the first message is a NAS message.

Optionally, the first message is a response message for the terminal device to request registration or a response message for the terminal device to request to establish a PDU session.

Optionally, the candidate authentication mechanism includes at least one of the following: an AKMA service, a GBA service, and a certificate mechanism.

Division into units in embodiments of this application is an example and is merely logical function division, and there may be another division manner during actual implementation. In addition, functional units in embodiments of this application may be integrated into one processor, each of the units may exist alone physically, or two or more units are integrated into one module. The integrated unit may be implemented in a form of hardware, or may be implemented in a form of a software functional module.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In embodiments of this application, both a base station and the terminal device may be presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the terminal device and the first network element may be in a form shown in FIG. 12.

A communication apparatus 1200 shown in FIG. 12 includes at least one processor 1201 and a memory 1202, and optionally, may further include a communication interface 1203.

The memory 1202 may be a volatile memory such as a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1202 is any other medium that can be used for carrying or storing expected program code in a form of instructions or a data structure and that can be accessed by a computer. However, this is not limited thereto. The memory 1202 may be a combination of the foregoing memories.

In this embodiment of this application, a specific connection medium between the processor 1201 and the memory 1202 is not limited. In this embodiment of this application, the memory 1202 is connected to the processor 1201 through a bus 1204 in the figure. The bus 1204 is indicated by a thick line in the figure. A mode of connection between other components is schematically described, and is not limited thereto. The bus 1204 may be classified into an address bus, a data bus, a control bus, and the like. For ease of representation, only one thick line is used for representing the bus in FIG. 12, but this does not mean that there is only one bus or only one type of bus.

The processor 1201 may have a data sending/receiving function, and can communicate with another device. In the apparatus shown in FIG. 12, an independent data transceiver module, for example, the communication interface 1203, may also be disposed and is configured to send/receive data. When communicating with the another device, the processor 1201 may perform data transmission through the communication interface 1203.

When the terminal device is in the form shown in FIG. 12, the processor 1201 in FIG. 12 may invoke computer-executable instructions stored in the memory 1202, to enable the terminal device to perform a function of the terminal device in any one of the foregoing method embodiments. Alternatively, when the first network element is in the form shown in FIG. 12, the processor 1201 in FIG. 12 may invoke computer-executable instructions stored in the memory 1202, to enable the first network element to perform a function of the first network element in any one of the foregoing method embodiments.

Specifically, a function/an implementation of the communication unit 1101 and the processing unit 1102 in FIG. 11 may be implemented by the processor 1201 in FIG. 12 by invoking the computer program instructions stored in the memory 1202. Alternatively, a function/an implementation processes of the processing unit 1102 in FIG. 11 may be implemented by the processor 1201 in FIG. 12 by invoking the computer-executable instructions stored in the memory 1202, and a function/an implementation of the communication unit 1101 in FIG. 11 may be implemented by the communication interface 1203 in FIG. 12.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for establishing secure communication, comprising:
receiving, by a terminal device, a first message from a first network element, wherein the first message comprises an identifier of a second network element and first indication information, and the first indication information indicates a candidate authentication mechanism associated with the second network element; and
establishing, by the terminal device, a communication connection with the second network element based on the candidate authentication mechanism.

2. The method according to claim 1, further comprising:
sending, by the terminal device, a second message to the first network element, wherein the first message is a response message of the second message.

3. The method according to claim 1 or 2, wherein the candidate authentication mechanism is at least one first authentication mechanism used when the terminal device establishes the communication connection with the second network element.

4. The method according to claim 3, wherein the second message comprises a network type used by the terminal device to access the second network element, and the at least one first authentication mechanism is an authentication mechanism that corresponds to the network type.

5. The method according to claim 3 or 4, wherein the second message comprises at least one second authentication mechanism supported by the terminal device, and the at least one first authentication mechanism is comprised in the at least one second authentication mechanism.

6. The method according to claim 5, wherein the second message further comprises priority information of the at least one second authentication mechanism, and the at least one second authentication mechanism is used for selecting the at least one first authentication mechanism.

7. The method according to any one of claims 3 to 6, wherein the establishing, by the terminal device, a communication connection with the second network element based on the candidate authentication mechanism comprises:
generating, by the terminal device, a first key and a first key identifier that correspond to a target authentication mechanism, wherein the target authentication mechanism is one of the at least one first authentication mechanism; and
sending, by the terminal device, a communication connection establishment request to the second network element, wherein the communication connection establishment request comprises the first key identifier.

8. The method according to claim 1 or 2, wherein the candidate authentication mechanism is at least one third authentication mechanism supported by the second network element.

9. The method according to claim 8, wherein the establishing, by the terminal device, a communication connection with the second network element based on the candidate authentication mechanism comprises:
determining, by the terminal device, a target authentication mechanism based on the at least one third authentication mechanism and assistance information, wherein the assistance information comprises at least one of the following: at least one second authentication mechanism supported by the terminal device and a network type used by the terminal device to access the second network element;
generating, by the terminal device, a first key and a first key identifier that correspond to the target authentication mechanism; and
sending, by the terminal device, a communication connection establishment request to the second network element, wherein the communication connection establishment request comprises the first key identifier

10. The method according to claim 9, wherein the assistance information further comprises at least one of the following: priority information of the at least one second authentication mechanism and priority information of the at least one third authentication mechanism.

11. The method according to claim 10, wherein the first message further comprises the priority information of the at least one third authentication mechanism.

12. The method according to claim 7 or 9, wherein the method further comprises:
generating, by the terminal device, a second key based on the first key and the identifier of the second network element.

13. The method according to claim 12, wherein the method further comprises:
performing, by the terminal device, security protection on the communication connection establishment request by using the second key, to generate a first message authentication code MAC, wherein the communication connection establishment request further comprises the first MAC.

14. The method according to any one of claims 1 to 13, wherein the first network element is an edge configuration server ECS, and the second network element is an edge enabler server EES; or the first network element is an EES, and the second network element is an edge application server EAS.

15. The method according to any one of claims 1 to 13, wherein the first network element is an access and mobility management function AMF or a session management function SMF, and the second network element is an edge configuration server ECS.

16. The method according to claim 15, wherein the first message is a non-access stratum NAS message.

17. The method according to claim 16, wherein the first message is a response message for the terminal device to request registration or a response message for the terminal device to request to establish a protocol data unit PDU session.

18. The method according to any one of claims 1 to 17, wherein the candidate authentication mechanism comprises at least one of the following: an authentication and key management for applications AKMA service, a generic bootstrapping architecture GBA service, and a certificate mechanism.

19. A method for establishing secure communication, comprising:
determining, by a first network element, a candidate authentication mechanism; and
sending, by the first network element, a first message to a terminal device, wherein the first message comprises an identifier of a second network element and first indication information, the first indication information indicates a candidate authentication mechanism associated with the second network element, and the candidate authentication mechanism is used by the terminal device to establish a communication connection with the second network element.

20. The method according to claim 19, further comprising:
receiving, by the first network element, a second message from the terminal device, wherein the first message is a response message of the second message.

21. The method according to claim 19 or 20, wherein the candidate authentication mechanism is at least one first authentication mechanism used when the terminal device establishes the communication connection with the second network element, and the determining, by a first network element, a candidate authentication mechanism comprises:
determining, by the first network element, the candidate authentication mechanism based on at least one third authentication mechanism supported by the second network element and assistance information, wherein the assistance information comprises at least one of the following: at least one second authentication mechanism supported by the terminal device and a network type used by the terminal device to access the second network element.

22. The method according to claim 21, wherein the second message comprises the network type used by the terminal device to access the second network element, and the at least one first authentication mechanism is an authentication mechanism that corresponds to the network type.

23. The method according to claim 21 or 22, wherein the second message comprises the at least one second authentication mechanism supported by the terminal device, and the at least one first authentication mechanism is comprised in the at least one second authentication mechanism.

24. The method according to any one of claims 21 to 23, wherein the assistance information further comprises at least one of the following: priority information of the at least one second authentication mechanism and priority information of the at least one third authentication mechanism, and the at least one second authentication mechanism is used for selecting the at least one first authentication mechanism.

25. The method according to claim 24, wherein the second message further comprises the priority information of the at least one second authentication mechanism.

26. The method according to claim 19 or 20, wherein the candidate authentication mechanism is at least one third authentication mechanism supported by the second network element.

27. The method according to claim 26, wherein the first message further comprises priority information of the at least one third authentication mechanism.

28. The method according to any one of claims 19 to 27, wherein the first network element is an ECS, and the second network element is an EES; or the first network element is an EES, and the second network element is an EAS.

29. The method according to any one of claims 19 to 27, wherein the first network element is an AMF or an SMF, and the second network element is an ECS.

30. The method according to claim 29, wherein the first message is a NAS message.

31. The method according to claim 30, wherein the first message is a response message for the terminal device to request registration or a response message for the terminal device to request to establish a PDU session.

32. The method of any one of claims 19 to 31, wherein the candidate authentication mechanism comprises at least one of the following: an AKMA service, a GBA service, and a certificate mechanism.

33. An apparatus, comprising a unit configured to implement the method according to any one of claims 1 to 18, or comprising a unit configured to implement the method according to any one of claims 19 to 32.

34. An apparatus, comprising a processor and a memory, wherein the memory stores instructions, and when the processor executes the instructions, the apparatus is enabled to perform the method according to any one of claims 1 to 18 or the method according to any one of claims 19 to 32.

35. A computer-readable storage medium, wherein the computer-readable storage medium stores instructions, and when the instructions are run on a computer, the computer is enabled to perform the method according to any one of claims 1 to 18 or the method according to any one of claims 19 to 32.
